(19) Europäisches Patentamt
European Patent Office
Office européen des brevets

(11) Veröffentlichungsnummer: **0 293 871 B1**

(12) **EUROPÄISCHE PATENTSCHRIFT**

(45) Veröffentlichungstag der Patentschrift: **17.03.93**

(51) Int. Cl.⁵: **C08F 293/00**, C09D 153/00

(21) Anmeldenummer: **88108799.3**

(22) Anmeldetag: **01.06.88**

(54) **Lichtstabilisierte, sternförmig polymerisierte Mikropartikel.**

(30) Priorität: **04.06.87 CH 2114/87**

(43) Veröffentlichungstag der Anmeldung:
**07.12.88 Patentblatt 88/49**

(45) Bekanntmachung des Hinweises auf die Patenterteilung:
**17.03.93 Patentblatt 93/11**

(84) Benannte Vertragsstaaten:
**AT BE CH DE ES FR GB IT LI NL SE**

(56) Entgegenhaltungen:
**EP-A- 0 326 717**
**WO-A-86/00626**

(73) Patentinhaber: **CIBA-GEIGY AG**
**Klybeckstrasse 141**
**CH-4002 Basel(CH)**

(72) Erfinder: **Slongo, Mario, Dr.**
**Sägetrainweg 553**
**CH-1712 Tafers(CH)**
Erfinder: **Rody, Jean, Dr.**
**Rütiring 82**
**CH-4125 Riehen(CH)**
Erfinder: **Sitek, Franciszek, Dr.**
**Grossmattweg 11**
**CH-4106 Therwil(CH)**
Erfinder: **Valet, Andreas, Dr.**
**Im Bruckacker 18**
**W-7859 Eimeldingen(DE)**

(74) Vertreter: **Zumstein, Fritz, Dr. et al**
**Bräuhausstrasse 4**
**W-8000 München 2 (DE)**

**EP 0 293 871 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft lichtstabilisierte, sternförmig polymerisierte Polymermikropartikel, Verfahren zu deren Herstellung, deren Verwendung in Beschichtungszusammensetzungen sowie Beschichtungszusammensetzungen, die solche Mikropartikel enthalten, sowie die bei der Herstellung der sternförmig polymerisierten Polymermikropartikel anfallenden "lebenden" Mikropartikel.

In der Beschichtungstechnik besteht in neuerer Zeit, bedingt durch das Erfordernis einer möglichst geringen Umweltbelastung, ein besonderes Interesse an der Erhöhung des Anteils des in den Beschichtungszusammensetzungen anwesenden filmbildenden Materials und an der Reduktion des Anteils an inerten flüssigen Verdünnungsmitteln, die während der Lackherstellung und der Trocknung und Härtung abgedampft werden müssen.

Beschichtungszusammensetzungen mit einem hohen Anteil an filmbildendem Material sind z.B. aus der EP-A 3166 und der EP-A 119 051 sowie der jeweils darin zitierten Literatur bekannt; sie sind im allgemeinen aus einer flüssigen kontinuierlichen Phase und einer dispersen Phase, die einen gegebenenfalls hohen Anteil an unlöslichen Polymermikroteilchen enthält, aufgebaut.

Die resultierenden Filme und Beschichtungen besitzen einen zusammengesetzten Charakter, nämlich eine Polymermatrix oder eine kontinuierliche Phase, die sich von ursprünglich in Lösung befindlichem Polymer ableitet, und eine disperse Phase, die sich von den Polymermikroteilchen ableitet.

Aus der WO-A-86/00626 und der US-A 4,695,607 sind sternförmig polymerisierte Polymermikropartikel, einschliesslich "lebende" Mikropartikel, bekannt, die ebenfalls für die vorstehend angegebenen Zwecke verwendet werden können.

Derartige Mikropartikel enthaltende Beschichtungszusammensetzungen weisen jedoch eine nur ungenügende Lichtstabilität auf, da bisher nur das Lackgemisch als solches durch physikalische Zumischung eines Lichtschutzmittels in der homogenen flüssigen Phase stabilisiert werden kann.

Der gegebenenfalls hohe Mikropartikelanteil solcher Beschichtungen ist dagegen unstabilisiert.

Es wurde nun gefunden, dass sich die Lichtstabilität von Beschichtungen und Lacken, insbesondere Einbrennlacken, mit einem Anteil an den genannten Mikropartikeln verbessern lässt, wenn man entsprechende Lichtschutzmittel in die Mikropartikel inkorporiert und diese damit direkt vor Witterungseinflüssen, insbesondere Bestrahlung, schützt.

Die vorliegende Erfindung betrifft daher in einem ersten Aspekt lichtstabilisierte, sternförmig polymerisierte Polymermikropartikel, enthaltend

(a) einen Polymerkern aus 1-100 Gew.% eines oder mehrerer Monomeren, die mindestens 2 Gruppen der Formel

$$-Z^1-\overset{O}{\overset{\|}{C}}-\overset{R}{\overset{|}{C}}=CH_2 \quad (1)$$

enthalten, und

0-99 Gew.% eines oder mehrerer Monomeren, die eine Gruppe der Formel (1) enthalten, und

(b) mindestens 5 am Polymerkern befestigte Arme aus Polymerketten aus einem oder mehrerer Monomeren, die eine Gruppe der Formel (1) enthalten, wobei in Formel (1) R H, $CH_3$, $CH_3CH_2$, CN oder COOR′, $Z^1$ O oder NR′ und R′ $C_1$-$C_8$-Alkyl bedeuten;

worin mindestens 50 % der Mikropartikel mindestens 5 bis 2 000 000 solcher Arme aufweisen, wobei diese Arme aus einer oder mehreren Gruppen von verschiedenen Polymertypen bestehen, und wobei

(α) die Polymerketten einer der besagten Gruppen von Armen das gleiche oder verschiedene Molekulargewichte wie die der anderen Gruppen haben und sich von den gleichen Monomeren wie die Polymerketten der anderen Gruppen von Armen, oder von diesen verschiedenen Monomeren, ableiten,

(β) die Polymerketten jeder Gruppe von Armen eine Arm-Polymolekularität von 1,0 bis 2,0 aufweisen, wobei diese Polymolekularität definiert ist durch das Gewichtsmittel geteilt durch das Zahlenmittel der Polymerketten in der Gruppe und

(γ) die sternförmig polymerisierten Mikropartikel selbst, enthaltend Kern und Arme aus einer oder mehreren Gruppen, eine Polymolekularität von 1,0 bis 2,0 aufweisen, wobei diese Polymolekularität definiert ist durch das Gewichtsmittel geteilt durch das Zahlenmittel der Mikropartikel;

und wobei diese Polymermikropartikel 0,1 bis 30 Gew.%, bezogen auf die eingesetzten Monomeren, eines oder mehrerer Lichtschutzmittel(s) enthalten.

Insbesondere weisen diese Mikropartikel eine Polymolekularität der Arme von 1,3 bis 1,6 und eine Polymolekularität der gesamten Mikropartikel von 1,3 bis 1,6 auf.

Vorzugsweise enthalten die beschriebenen Mikropartikel eine einzige oder zwei Gruppen von Armen, insbesondere 1 Gruppe von Armen.

Eine weitere Ausführungsform der vorliegenden Erfindung betrifft lichtstabilisierte, lösliche, sternförmig polymerisierte Polymermikropartikel enthaltend

(a) einen vernetzten Kern enthaltend ein Polymer aus einer Mischung von 1-100 Gew.% eines oder mehrerer Monomeren, die mindestens 2 Gruppen der Formel

$$-Z^1-\overset{O}{\overset{\|}{C}}-\overset{R}{\overset{|}{C}}=CH_2 \qquad (1)$$

enthalten, und

0-99 Gew.% eines oder mehrerer Monomeren, die eine Gruppe der Formel (1) enthalten, und

(b) mindestens 5 am Polymerkern befestigte Arme aus Polymerketten, die von einem oder mehreren Monomeren abgeleitet sind, die eine Gruppe der Formel (1) enthalten, wobei in Formel (1) R H, $CH_3$, $CH_3CH_2$, CN oder COOR$'$, $Z^1$ O oder NR$'$ und R$'$ $C_1$-$C_8$-Alkyl bedeuten;

worin mindestens 50 % der Mikropartikel mindestens 5 bis 2 000 000 Arme aufweisen, wobei das Verhältnis der Anzahl der Arme zur Zahl der bifunktionellen wiederkehrenden Acryleinheiten im Kern ≦ 1:1 ist, und wobei diese Polymermikropartikel 0,1 bis 30 Gew.%, bezogen auf die eingesetzten Monomeren, eines oder mehrerer Lichtschutzmittel(s) enthalten.

Solche Mikropartikel werden vorzugsweise mit Hilfe eines Polymerisationsinitiators in einem molaren Verhältnis Initiator:bifunktionelles Acrylmonomer ≦ 1:1 erhalten, wodurch ein vernetzter Kern entsteht und wobei die Reaktionsmischung nicht geliert. Unter "löslich" wird verstanden, dass sich aus einer 1%-igen Lösung in Toluol, Ethylenglykoldimethylether und/oder Tetrahydrofuran bei 30 minütigem Zentrifugieren bei 17000 U/min. nichts abscheidet. Vorzugsweise solubilisieren die Arme den Kern.

Die erfindungsgemässen sternförmig polymerisierten Mikropartikel werden besonders vorteilhaft durch Gruppentransferpolymerisation hergestellt.

Daher betrifft eine besonders bevorzugte Ausführungsform der vorliegenden Erfindung lichtstabilisierte, "lebende", sternförmig polymerisierte Polymermikropartikel, enthaltend

(a) einen vernetzten Kern enthaltend ein Polymer aus einer Mischung aus

1-100 Gew.% eines Monomeren mit mindestens 2 durch Gruppentransferpolymerisation polymerisierbaren C-C-Doppelbindungen und

0-99 Gew.% eines Monomeren mit einer durch Gruppentransferpolymerisation polymerisierbaren C-C-Doppelbindung,

(b) mindestens 5 am Polymerkern befestigte Arme enthaltend Polymerketten aus einem oder mehreren Monomeren, die durch Gruppentransferpolymerisation polymerisierbar sind, und

(c) an den Kern oder/und an mindestens einige der Arme gebundene "lebende" Gruppentransferpolymerisationszentren, die zur Weiterpolymerisation befähigt sind,

welche Polymermikropartikel 0,1 bis 30 Gew.%, bezogen auf die eingesetzten Monomeren, eines oder mehrerer Lichtschutzmittel(s) enthalten;

sowie ferner sternförmig polymerisierte Polymermikropartikel, erhältlich durch Desaktivierung der vorstehend beschriebenen "lebenden" Mikropartikel mit Hilfe eines die "lebenden" Gruppen der Gruppentransferpolymerisationszentren desaktivierenden Reagens. Auch diese desaktivierten Polymermikropartikel enthalten 0,1 bis 30 Gew.%, bezogen auf die eingesetzten Monomeren, eines oder mehrerer Lichtschutzmittel(s). Diesen Mikropartikeln fehlt das obige Merkmal (c).

Bei der Herstellung der erfindungsgemässen Mikropartikel wird mindestens ein Teil der Polymerisation der Monomeren in Gegenwart des (der) Lichtschutzmittel(s) durchgeführt.

Unter Mikropartikel sollen hierbei Polymerteilchen mit einer Grösse oder Grössenverteilung in den kolloidalen Dimensionen (z.B. ca. 0,01-20 μm) verstanden werden, die in der kontinuierlichen flüssigen Phase von Beschichtungszusammensetzungen unlöslich sind. Der Ausdruck Polymermikropartikel ist in der Lacktechnik und damit in der einschlägigen Literatur wohlbekannt. Ein wesentliches Merkmal der Mikropartikel neben ihrer Grösse ist, dass sie einen vernetzten Kern enthalten bzw. aus diesem bestehen. Die Mikropartikel weisen in der Idealform eine annähernd kugelförmige Gestalt auf. In der Literatur ist an Stelle des Ausdrucks "Mikropartikel" auch der Ausdruck "Mikrogel" gebräuchlich. Daher können die erfindungsgemässen Mikropartikel auch als lichtstabilisierte Polymermikrogele bezeichnet werden. In der vorliegenden

Anmeldung werden beide Ausdrücke gebraucht und sind synonym.

Bevorzugte, für erfindungsgemässe Mikropartikel verwendete Monomere, die eine C-C-Doppelbindung enthalten, die durch Gruppentransferpolymerisation polymerisierbar ist, sind beispielsweise:

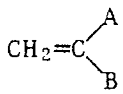 , 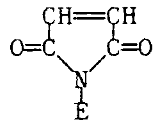

und deren Mischungen, worin
A CN,

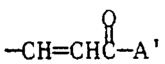 oder 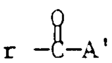 ,

B H, $CH_3$, CN oder -COOE bedeuten, mit der Massgabe, dass für den Fall A =

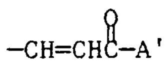

B für H oder $CH_3$ steht; A′ $-OSi(E^1)_3$, -E, -OE oder -NE′E″ ist, jedes $E^1$ unabhängig voneinander $C_1$-$C_{10}$-Alkyl, $C_6$-$C_{10}$-Aryl oder $C_1$-$C_6$-Alkyl-$C_6$-$C_{10}$-Aryl bedeutet;
E $C_1$-$C_{20}$-Alkyl, $C_2$-$C_{20}$-Alkenyl, Dienyl, $C_6$-$C_{20}$-Cycloalkyl, $C_6$-$C_{10}$-Aryl, $C_1$-$C_6$-Alkyl-$C_6$-$C_{10}$-Aryl oder Phenyl-$C_1$-$C_4$-alkyl ist, wobei jeder dieser Reste eine oder mehrere Ether-Sauerstoffatome in aliphatischen Teilen enthalten kann, und wobei funktionelle Substituenten in solchen Resten unter den Polymerisationsbedingungen nicht reagieren; und
E′ und E″ unabhängig voneinander $C_1$-$C_8$-Alkyl bedeuten.

Bevorzugte Gruppentransferkatalysatorzentren in "lebenden" Polymermikropartikeln sind solche der Formel $(E^1)_3M$, worin $E^1$ die obige Bedeutung hat und M Si, Sn oder Ge ist.

Besonders bevorzugt enthalten die erfindungsgemässen sternförmig polymerisierten Polymermikropartikel

(a) einen Kern enthaltend ein Polymer aus einer Mischung aus 1-100 Gew.% eines Monomeren mit mindestens 2 C-C-Doppelbindungen, die mit Hilfe eines Initiators der Formel Q-Z polymerisierbar sind und
0-99 Gew.% eines Monomeren mit einer C-C-Doppelbindung, die mit Hilfe eines Initiators der Formel Q-Z polymerisierbar ist,

(b) mindestens 5 am Polymerkern befestigte Arme enthaltend Polymerketten aus einem oder mehreren Monomeren, die mit Hilfe eines Initiators der Formel Q-Z polymerisierbar sind, und

(c) an den Kern oder/und an mindestens einige der Arme gebundene Gruppen der Formel Q-Z″, wobei diese Polymermikropartikel 0,1 bis 30 Gew.%, bezogen auf die eingesetzten Monomeren, eines oder mehrerer Lichtschutzmittel(s) enthalten, und worin die Gruppe Q der initiierende Teil eines "lebenden" Gruppentransferpolymerisationsinitiators Q-Z ist und worin Z″ von einem aktivierenden Substituenten Z eines solchen Initiators abgeleitet ist; und worin der Initiator Q-Z imstande ist, mit einem eine C-C-Doppelbindung enthaltenden Monomeren ein "lebende" Polymerkette zu bilden, die die Gruppe Z″ an einem Ende der "lebenden" Polymerkette und die Gruppe Q am anderen Ende enthält; und worin die "lebende" Polymerkette imstande ist, die Polymerisation eines weiteren Monomeren zu initiieren, welches das gleiche sein kann, mit dem die "lebende" Polymerkette hergestellt wurde, oder welches von diesem verschieden sein kann, wodurch eine grössere "lebende" Polymerkette entsteht, die am einen Ende eine Gruppe Z″ und am anderen Ende eine Gruppe Q trägt; und worin Z″ gleich Z oder ein Isomeres davon ist.

Besonders vorteilhaft ist Q eine Gruppe der Formel $(E^1)_3M$, die wie oben definiert ist.

Z bedeutet vorzugsweise

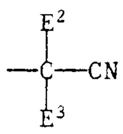 , , 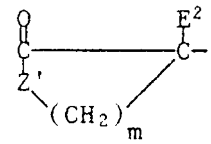

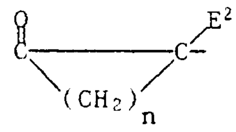 , 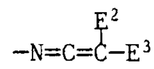 , 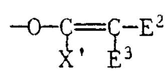

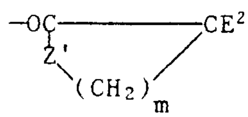 oder 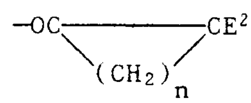

und deren Mischungen, worin
X′ $OSi(E^1)_3$, -E, -OE oder NE′E″ bedeutet, worin E, $E^1$, E′ und E″ wie weiter oben definiert sind,
$E^2$ und $E^3$ unabhängig voneinander Wasserstoff, $C_1$-$C_{10}$-Alkyl, $C_2$-$C_{10}$-Alkenyl, $C_6$-$C_{10}$-Aryl, $C_1$-$C_6$-Alkyl-$C_6$-$C_{10}$-Aryl oder $C_6$-$C_{10}$-Aryl-$C_1$-$C_4$-alkyl bedeuten; und wobei die vorstehenden Gruppen (Ausnahme: Wasserstoff) einen oder mehrere funktionelle Substituenten enthalten können, die unter den Polymerisationsbedingungen nicht reagieren;
Z′ O oder NE′,
m 2, 3 oder 4 und
n 3, 4 oder 5 sind.

Die Herstellung der erfindungsgemässen Mikropartikel erfolgt, wie bereits erwähnt, besonders vorteilhaft mit Hilfe von Gruppentransferpolymerisation, wobei mindestens ein Polymerisationsschritt in Gegenwart des (der) Lichtschutzmittel(s) durchgeführt wird (Zugabe der (des) letzteren vor der Polymerisation zu den Monomeren, während der Polymerisation oder gegen Ende der Polymerisation). Die Gruppentransferpolymerisation ist an sich bekannt und kann nach den in der Literatur beschriebenen Verfahren durchgeführt werden. Besonders vorteilhaft verwendet man die in der WO-A-86/00626 bzw. US-A-4,695,607 beschriebenen Gruppentransferpolymerisationsverfahren und die aus den dort genannten Literaturstellen bekannten Verfahren. Die WO-A-86/00626 und US-A-4,695,607 sollen als Bestandteil der vorliegenden Beschreibung verstanden werden.

Im besonderen wird hier unter Gruppentransferpolymerisation ein Verfahren verstanden, bei dem die Polymerisation von Monomeren mit C-C-Doppelbindungen durch verschiedene Initiatoren der Formel Q-Z initiiert wird, worin Z ein aktivierender Substituent ist, der an ein Ende des wachsenden Polymermoleküls gebunden wird und Q eine Gruppe ist, die kontinuierlich ans andere Ende des wachsenden Polymermoleküls wandert, je mehr Monomer an das Polymermolekül angelagert wird. So z.B. verläuft die durch den Initiator Q-Z initiierte Polymerisation eines Monomeren

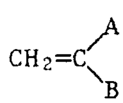

folgendermassen:

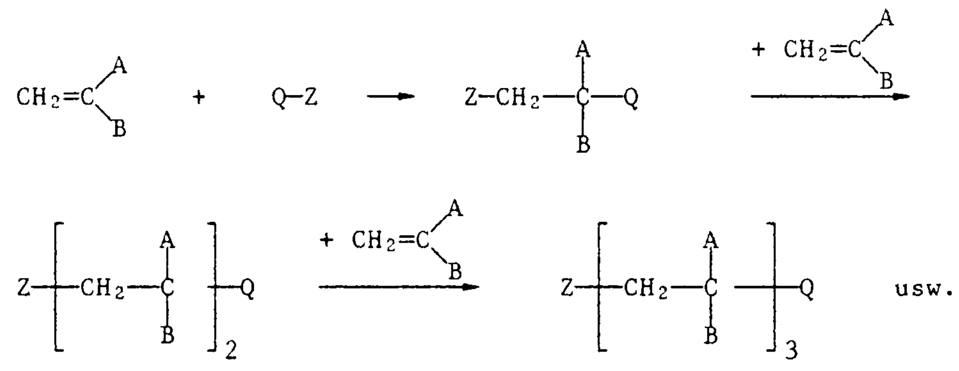


Die Gruppe Q ist also ein aktives Zentrum und kann weitere Anlagerung von Monomeren initiieren. Ein Polymermolekül mit einer Gruppe Q wird als "lebendes" Polymer und die Gruppe Q selbst als "lebendes" Gruppentransferpolymerisationszentrum bezeichnet.

In diesem Zusammenhang ist das Wort "lebend" immer in Anführungszeichen gesetzt, da es selbstverständlich nichts mit Leben im biologischen Sinn zu tun hat. Der Ausdruck für derartige Gruppen ist in der einschlägigen Literatur gängig.

Insbesondere werden zur Herstelung der erfindungsgemässen sternförmig polymerisierten, lichtstabilisierten Polymermikropartikel die Gruppentransferpolymerisationsmethoden herangezogen, die neben der WO-A-86/00626 auch teilweise in US-A-4,414,372, 4,417,034, 4,508,880 und 4,524,196 beschrieben sind, wobei diese ebenfalls als Teil der vorliegenden Beschreibung zu betrachten sind. Gruppentransferpolymerisationen liefern ein "lebendes" Polymer, wenn z.B. ein Initiator der Formel $(E^1)_3MZ$ zur Initiierung der Polymerisation eines Monomeren mit einer C-C-Doppelbindung verwendet wird.

Im Initiator $(E^1)_3MZ$ ist die Gruppe Z ein aktivierender Substituent (wie oben beschrieben), der an das eine Ende des "lebenden" Polymermoleküls gebunden wird. Die Gruppe $(E^1)_3M$ lagert sich an das andere, das "lebende", Ende des Polymermoleküls an. Das entstehende "lebende" Polymermolekül kann selbst als Initiator für die Polymerisation des gleichen oder eines anderen Monomeren fungieren, um ein neues "lebendes" Polymermolekül zu bilden, mit Z an einem und $(E^1{}_3)M$ am anderen ("lebenden") Ende. Das "lebende" Polymer kann dann desaktiviert werden, wenn erwünscht, z.B. durch Reaktion mit einer Protonenquelle, z.B. einem Alkohol.

Im Rahmen der vorliegenden Erfindung sind die durch Gruppentransferpolymerisation herstellbaren, lichtstabilisierten sternförmigen Mikropartikel von zentraler Bedeutung, die durch Desaktivierung der "lebenden" Polymermoleküle (-partikel) mit einer Protonenquelle, z.B. mit Alkoholen, insbesondere Ethanol oder Methanol, erhalten werden. Sie sind es, die erfindungsgemäss in Lackzusammensetzungen inkorporiert werden können. Die "lebenden" Polymermoleküle bzw. -mikropartikel sind als Zwischenprodukte bzw. -stufen zu verstehen, die normalerweise nicht isoliert werden.

Zur Illustration ist im folgenden das Reaktionsschema der Polymerisation eines spezifischen Monomeren (Methylmethacrylat) mit einem spezifischen Initiator (1-Trimethylsiloxy-1-isobutoxy-2-methylpropen) angegeben:

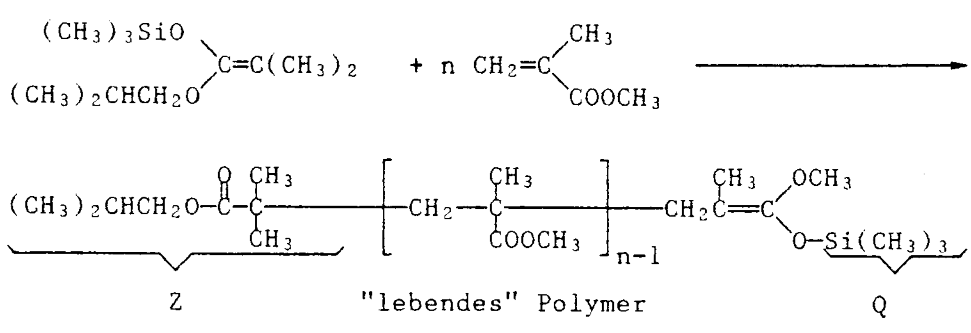

Wenn dieses "lebende" Polymer mit einem weiteren Monomeren mit C-C-Doppelbindung umgesetzt wird, entsteht z.B. mit m Mol Butylmethacrylat das folgende "lebende" Polymer:

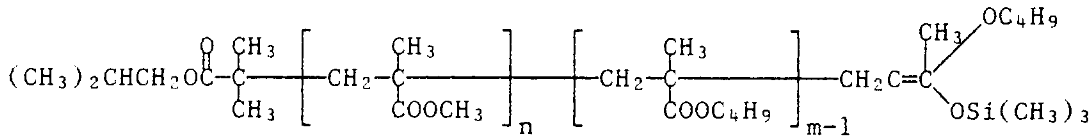

Kontakt mit Methanol ergibt das folgende desaktivierte Polymer:

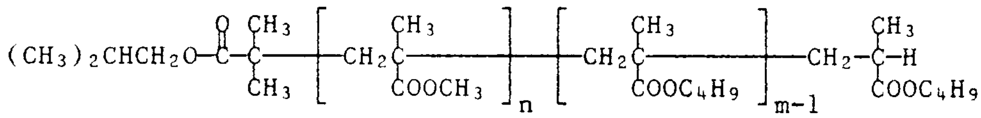

Der Aufbau der erfindungsgemässen Polymermikropartikel kann z.B. nach drei verschiedenen Methoden erfolgen, die nachstehend beschrieben sind:

1. Arm-Kern-Verfahren

Dieses besteht darin, dass man

(a) ein "lebendes" Polymer herstellt durch Reaktion eines Gruppentransferinitiators mit einem oder mehreren Monomeren mit einer zur Gruppentransferpolymerisation befähigten C-C-Doppelbindung und

(b) das erhaltene "lebende" Polymer mit einer Mischung umsetzt, die 1-100 Gew.% eines Monomeren mit mindestens 2 durch Gruppentransferpolymerisation polymerisierbaren C-C-Doppelbindungen und 0-99 Gew.% eines Monomeren mit einer durch Gruppentransferpolymerisation polymerisierbaren C-C-Doppelbindung enthält,

wobei Schritt (a) oder/und (b) in Gegenwart von 0,1 bis 30 Gew.%, bezogen auf die Monomeren, eines oder mehrerer Lichtschutzmittel(s) durchgeführt werden.

Mit anderen Worten, es wird z.B. ein "lebendes" Polymer (der Arm) durch Reaktion eines Monomeren A enthaltend eine C-C-Doppelbindung mit einem Gruppentransferinitiator $(E^1)_3MZ$ hergestellt. Das erhaltene "lebende" Polymer wird mit einer polyfunktionellen Verbindung (Monomer B) umgesetzt, die mindestens 2 polymerisierbare C-C-Doppelbindungen im Molekül enthält. So entsteht ein sternförmig polymerisiertes Mikropartikel mit Armen aus polymerisiertem Monomer A, die an einen vernetzten Kern aus polymerisiertem Monomer B anpolymerisiert sind. Die aktiven Gruppentransferzentren im Kern können durch Reaktion mit einer Protonenquelle desaktiviert werden. Das (die) Lichtschutzmittel kann (können) in beiden Polymerisationsschritten oder nur in einem von beiden zugesetzt werden. Dementsprechend entstehen Polymermikropartikel, die im Kern, in den Armen oder in beiden dieser Teile lichtstabilisiert sind.

2. Kern/Arm-Verfahren

Dieses besteht darin, dass man

(a) einen "lebenden" Kern herstellt durch Reaktion eines Gruppentransferinitiators mit einer Mischung enthaltend

1-100 Gew.% eines Monomeren mit mindestens 2 durch Gruppentransferpolymerisation polymerisierbaren C-C-Doppelbindungen und

0-99 Gew.% eines Monomeren mit einer durch Gruppentransferpolymerisation polymerisierbaren C-C-Doppelbindung, und

(b) den erhaltenen "lebenden" Kern mit einem oder mehreren Monomeren mit einer C-C-Doppelbindung, die durch Gruppentransferpolymerisation polymerisierbar ist, umsetzt,

wobei Schritt (a) oder/und (b) in Gegenwart von 0,1 bis 30 Gew.%, bezogen auf die Monomeren, eines oder mehrerer Lichtschutzmittel(s) durchgeführt werden.

Mit anderen Worten, es wird z.B. ein "lebender" Kern durch Reaktion eines Gruppentransferinitiators $(E^1)_3MZ$ mit einer polyfunktionellen Verbindung (Monomer B), enthaltend mindestens 2 polymerisierbare C-C-Doppelbindungen pro Molekül, hergestellt. Dieser "lebende" Kern wird dann mit einem Monomeren A (wie oben beschrieben) umgesetzt, wodurch ein sternförmig polymerisiertes Mikropartikel mit Armen aus polymerisiertem Monomer A, die an den vernetzten Kern aus polymerisiertem Monomer B anpolymerisiert sind, entsteht. Die aktiven Gruppentransferzentren an den Enden der Arme können mit weiteren Monomeren umgesetzt oder durch Reaktion mit einem Protonenspender desaktiviert werden. Das (die) Lichtschutzmittel kann (können) in beiden Polymerisationsschritten oder nur in einem von beiden zugesetzt werden. Dementsprechend entstehen Polymermikropartikel, die im Kern, in den Armen oder in beiden dieser Teile lichtstabilisiert sind.

3. Arm/Kern/Arm-Verfahren

Dieses besteht darin, dass man

(a) ein "lebendes" Polymer herstellt durch Reaktion eines Gruppentransferinitiators mit einem oder mehreren Monomeren mit einer C-C-Doppelbindung, die durch Gruppentransferpolymerisation polymerisierbar ist,

(b) das erhaltene "lebende" Polymer mit einer Mischung enthaltend 1-100 Gew.% eines Monomeren mit mindestens 2 durch Gruppentransferpolymerisation polymerisierbaren C-C-Doppelbindungen und 0-99 Gew.% eines Monomeren mit einer durch Gruppentransferpolymerisation polymerisierbaren C-C-Doppelbindung so umsetzt, dass man "lebende" sternförmig polymerisierte Mikropartikel mit "lebenden" Gruppentransferpolymerisationszentren im Kern erhält, und

(c) die so erhaltenen "lebenden" Polymeren mit einem oder mehreren Monomeren umsetzt, die eine C-C-Doppelbindung enthalten, die durch Gruppentransferpolymerisation polymerisierbar sind, wobei diese Monomeren gleich oder verschieden von denen sind, die in Schritt (a) eingesetzt werden,

wobei man Schritt (a), (b) oder/und (c) in Gegenwart von 0,1 bis 30 Gew.%, bezogen auf die Monomeren, eines oder mehrerer Lichtschutzmittel(s) durchführt.

In diesem Verfahren wird also z.B. ein "lebendes" Polymer (die ersten Arme) durch Umsetzung eines Monomeren A, das eine polymerisierbare C-C-Doppelbindung im Molekül enthält, mit einem Gruppentransferinitiator $(E^1)_3MZ$ hergestellt. Das erhaltene "lebende" Polymer wird dann mit einer polyfunktionellen Verbindung (Monomer B), die mindestens 2 polymerisierbare C-C-Doppelbindungen im Molekül enthält, umgesetzt. Das resultierende Polymer weist Arme aus polymerisiertem Monomer A, die an einen vernetzten Kern von polymerisiertem Monomer B anpolymerisiert sind, auf, wobei der Kern noch "lebende" Gruppentransferzentren enthält. Dieses Polymer wird dann mit einem dritten Monomeren C, das eine polymerisierbare C-C-Doppelbindung enthält, umgesetzt, wodurch weitere Arme an den Kern anpolymerisiert werden, die aus polymerisiertem Monomer C bestehen. Natur und Menge (Molzahl) von C kann dabei gleich wie A sein oder verschieden davon. Entsprechend können die beiden Typen von Armen unterschiedliche Molekulargewichte haben oder/und sich von verschiedenen Monomeren ableiten. Wenn man 2 oder mehr Typen von "lebenden" Gruppentransferzentren in den Kern einführt und unterschiedlich reaktive funktionelle Gruppen an den Armen verwendet, kommt man zu Polymermikropartikeln mit mehr als 2 verschiedenen Typen von Armen. Das (die) Lichtschutzmittl kann (können) in den 3 Polymerisationsschritten, nur in einem von ihnen, oder auch in jeweils zwei davon zugesetzt werden. Dementsprechend entstehen Polymermikropartikel, die im Kern, in einer Armart, in allen Armarten, im Kern und einer Armart oder im Kern und in allen Armen lichtstabilisiert sind.

Als polyfunktionelle Verbindungen (Monomere mit mindestens 2 durch Gruppentransferpolymerisation polymerisierbaren C-C-Doppelbindungen), oben auch als "Monomere B" bezeichnet, kommen alle Moleküle in Betracht, die mindestens 2 ethylenische C-C-Doppelbindungen enthalten. Beispiele dafür sind: Ethylen-dimethacrylat, 1,3-Butylen-dimethacrylat, Ethylenglykol-dimethacrylat, Tetraethylenglykol-dimethacrylat, Di- und Triethylenglykol-dimethacrylat, Trimethylolpropan-trimethacrylat, 1,6-Hexylen-dimethacrylat, 1,4-Butylen-dimethacrylat, Ethylen-diacrylat, 1,3-Butylen-diacrylat, Tetraethylenglykol-diacrylat, Triethylenglykol-diacrylat, Trimethylolpropan-triacrylat, 1,6-Hexylen-diacrylat, 1,4-Butylen-diacrylat, Allylmethacrylat.

Monomere mit einer durch Gruppentransferpolymerisation polymerisierbaren Doppelbindung sind beispielsweise gegebenenfalls substituierte Alkylester der Methacrylsäure wie Methyl-, Ethyl-, Butyl-, Hexyl- und 2-Ethylhexylmethacrylat und 2-Isocyanoethylmethacrylat. Bevorzugt ist Methyl-, Ethyl- und 2-Ethylhexylmethacrylat.

Weitere Beispiele für verwendbare Monomere und Verfahrensweisen sind der bereits oben erwähnten US-A-4,417,034 zu entnehmen, insbesondere den Spalten 2-9.

Weitere Beispiele für erfindungsgemäss verwendbare Ausgangsmonomere, für Katalysatoren, Lösungsmittel, Initiatoren, Reaktionsschemen und Berechnungsmethoden sind den Seiten 17 bis 24 der WO-A-86/00626 bzw. Spalte 11, Zeile 40 bis Spalte 16, Zeile 46 der US-A-4,695,607 zu entnehmen und werden als in vorliegender Beschreibung offenbart verstanden.

Als Beispiele von Initiatoren seien besonders erwähnt: 1-Trimethylsiloxy-1-isobutoxy-2-methylpropen und 1-(2-Trimethylsiloxyethoxy)-1-trimethylsiloxy-2-methylpropen.

Beispiele für Katalysatoren sind Tris(dimethylamino)sulfonium-bifluorid ($TASHF_2$), Tetrabutylammonium-bifluorid ($TBAHF_2$), Tetrabutylammoniumfluorid (TBAF), Tetrabutylammoniumchlorbenzoat (TBACF).

Als Lösungsmittel kommen z.B. 1,2-Dimethoxyethan, Acetonitril, Xylol und Tetrahydrofuran in Betracht.

Die in den erfindungsgemässen sternförmig polymerisierten Polymermikropartikeln enthaltenen Lichtschutzmittel, die, wie oben beschrieben, während mindestens eines Polymerisationsschrittes bei der Herstellung der Mikropartikel während der Polymerisation anwesend sind, können im Polymeren chemisch verankert (das Lichtschutzmittel nimmt an der Polymerisation teil), oder lediglich physikalisch eingeschlossen sein. Beide Fälle führen zu der erwünschten Lichtstabilisation, der chemische Einbau ist jedoch bevorzugt.

Für die Lichtstabilisierung der Mikropartikel kommen Vertreter praktisch aller bekannten Klassen von Lichtschutzmitteln, z.B. sterisch gehinderte Amine, 2-(2-Hydroxyphenyl)benztriazole, Oxalsäureanilide, 2-Hydroxybenzophenone, Hydroxyphenyltriazine oder Zimtsäurederivate, in Frage. Als Lichtschutzmittel bevorzugt sind hierbei 2-(2-Hydroxyphenyl)benztriazole und insbesondere sterisch gehinderte Amine.

Gehört das Lichtschutzmittel der Klasse der sterisch gehinderten Amine an, so handelt es sich vorzugsweise um cyclische Amine, insbesondere um Derivate von 5-, 6- oder 7-gliedrigen heterocyclischen Ringsystemen mit 1 oder 2 N-Atomen, die in beiden Ortho-Positionen zum N-Atom tertiäre C-Atome besitzen, wodurch eine sterische Hinderung des N-Atoms bewirkt wird.

Beispiele für solche Ringsysteme sind die 2,2,5,5-tetrasubstituierten Pyrrolidine, Imidazolidone oder Oxazoline der Formeln

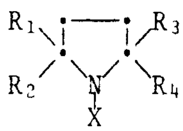 , 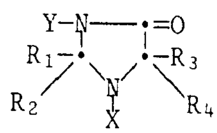 , 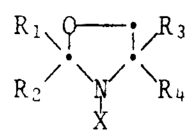

oder die 2,2,6,6-tetrasubstituierten Piperazinone und Piperazindione der Formeln

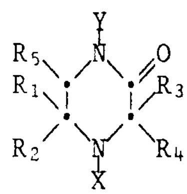 und 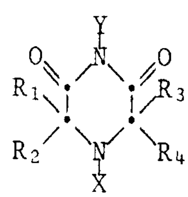

oder die Diazacycloheptanone der Formel

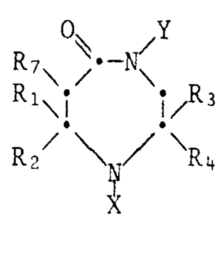

worin $R_1$, $R_2$, $R_3$ und $R_4$ gegebenenfalls zu Spiroringen vereinigte aliphatische Kohlenwasserstoffreste, $R_5$ und $R_7$ Wasserstoff oder Alkyl und X Wasserstoff, Oxyl-Sauerstoff oder einen einwertigen organischen Rest und Y Wasserstoff, einen einwertigen oder zweiwertigen organischen Rest bedeuten, beispielsweise eine Verbindung der Formel

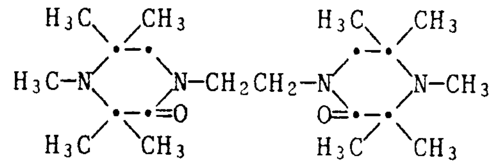

Auch in 2-Stellung disubstituierte Decahydrochinoline sind Repräsentanten der sterisch gehinderten Amine.

Von besonderer Bedeutung unter den Verbindungen der sterisch gehinderten Amine sind die 2,2,6,6-Tetraalkylpiperidinderivate. Es handelt sich dabei um Verbindungen, die in ihrem Molekül mindestens eine Gruppe der Formel I enthalten,

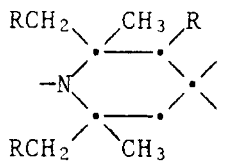

(I),

worin R Wasserstoff oder Methyl bedeutet. Das Lichtschutzmittel kann eine oder mehrere solcher Gruppen der Formel I enthalten, beispielsweise kann es sich um eine Mono-, Bis-, Tris-, Tetra- oder Oligopiperidinverbindung handeln. Bevorzugt sind Piperidinderivate, die eine oder mehrere Gruppen der Formel I enthalten, worin R Wasserstoff ist, sowie solche, deren Ringstickstoff kein Wasserstoffatom trägt.

Die meisten dieser Piperidin-Lichtschutzmittel tragen polare Substituenten in der 4-Stellung des Piperidinringes oder tragen einen Spiroring in dieser Stellung.

Von Bedeutung sind insbesondere die folgenden Klassen von Piperidinverbindungen.

a) Verbindungen der Formel II

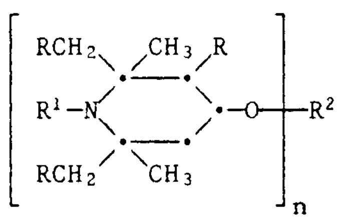

(II),

worin n eine Zahl von 1 bis 4, vorzugsweise 1 oder 2 bedeutet, R Wasserstoff oder Methyl bedeutet, $R^1$ Wasserstoff, Oxyl, $C_1$-$C_{18}$ Alkyl, $C_3$-$C_8$ Alkenyl, $C_3$-$C_8$ Alkinyl, $C_1$-$C_{18}$-Alkoxy, $C_5$-$C_{12}$-Cycloalkoxy, $C_3$-$C_{18}$-Alkenyloxy, $C_7$-$C_{12}$ Aralkyl, $C_2$-$C_8$ Alkanoyl, $C_3$-$C_5$ Alkenoyl, $C_2$-$C_8$-Alkanoyloxy-$C_1$-$C_4$-alkyl, $C_3$-$C_8$-Alkenoyloxy-$C_1$-$C_4$-alkyl oder Glycidyl bedeutet, wobei $R^1$ vorzugsweise $C_1$-$C_{12}$-Alkyl, Allyl, Benzyl, Acetyl, (Meth)acryloyl oder (Meth)acryloyloxyethyl ist und $R^2$, wenn n 1 ist, gegebenenfalls durch ein oder mehrere Sauerstoffatome unterbrochenes $C_1$-$C_{18}$ Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen (gesättigten oder vorzugsweise ungesättigten) Carbonsäure mit 2 bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wenn n 2 ist, $C_1$-$C_{12}$ Alkylen, $C_4$-$C_{12}$ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer (gesättigten oder vorzugsweise ungesättigten) aliphatischen, cycloaliphatischen oder aromatischen Tricarbonsäure, einer

aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten $C_1$-$C_{12}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$ Alkyl können $R^1$ oder $R^2$ z.B. die oben angeführten Gruppen und dazu noch beispielsweise n-Tridecyl, n-Tetradecyl, n-Hexadecyl oder n-Octadecyl darstellen. Als Beispiele für $C_1$-$C_{18}$-Alkoxy sind die sich von den vorstehenden Alkylgruppen ableitenden Alkoxygruppen zu erwähnen.

$R^1$ als $C_3$-$C_8$-Alkenoyloxy-$C_1$-$C_4$-alkyl ist z.B. $C_3$-$C_5$-Alkenoyloxy-$C_1$-$C_2$-alkyl, insbesondere (Meth)-acryloyloxyethyl. Wenn $R^1$ $C_3$-$C_8$ Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R^1$ ist als $C_3$-$C_8$ Alkinyl bevorzugt Propargyl. Cycloalkyl(oxy) ist bevorzugt $C_5$-$C_7$-Cycloalkyl(oxy), insbesondere Cyclohexyl(oxy).

Als $C_7$-$C_{12}$ Aralkyl ist $R^1$ insbesondere Phenethyl oder vor allem Benzyl.

$R^1$ ist als $C_1$-$C_8$ Alkanoyl beispielsweise Formyl, Propionyl, Butyryl, Octanoyl, aber bevorzugt Acetyl und als $C_3$-$C_5$ Alkenoyl insbesondere Acryloyl.

Bedeutet $R^2$ einen einwertigen Rest einer Carbonsäure, so stellt es beispielsweise einen Essigsäure-, Capronsäure-, Stearinsäure-, Acrylsäure-, Methacrylsäure- oder Benzoesäurerest dar.

Bedeutet $R^2$ einen zweiwertigen Rest einer Dicarbonsäure, so stellt es beispielsweise einen Malonsäure-, Adipinsäure-, Korksäure-, Sebacinsäure-, Maleinsäure-, Fumarsäure-, Phthalsäure, Dibutylmalonsäure-, Debenzylmalonsäure- oder Bicycloheptendicarbonsäurerest dar.

Stellt $R^2$ einen dreiwertigen Rest einer Tricarbonsäure dar, so bedeutet es z.B. einen Trimellitsäure- oder einen Nitrilotriessigsäurerest.

Stellt $R^2$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $R^2$ einen zweiwertigen Rest einer Dicarbaminsäure, so stellt es beispielsweise einen Hexamethylendicarbaminsäure- oder einen 2,4-Toluylen-dicarbaminsäurerest dar. Besonders zu erwähnen sind dabei Verbindungen der Formel II, worin n 1 oder 2, R Wasserstoff, $R^1$ Oxyl, $C_1$-$C_6$-Alkyl, $C_1$-$C_{12}$-Alkoxy, $C_3$-$C_8$-Alkenyloxy, Cyclohexyloxy, $C_3$-$C_8$-Alkenyl, z.B. Allyl, Benzyl, $C_2$-$C_6$-Alkanoyl, $C_3$-$C_5$-Alkenoyl, z.B. Acryloyl oder Methacryloyl, $C_3$-$C_8$-Alkenoyloxy-$C_1$-$C_4$-alkyl, z.B. (Meth)acryloyloxyethyl oder Glycidyl und $R_2$, wenn n 1 ist, $C_1$-$C_{12}$-Alkyl, Benzyl oder den Rest einer aliphatischen Carbonsäure mit 2-18 C-Atomen, einer $\alpha,\beta$-ungesättigten Carbonsäure mit 3-5 C-Atomen oder einer aromatischen Carbonsäure mit 7-15 C-Atomen, und wenn n 2 ist, $C_1$-$C_6$-Alkylen, $C_4$-$C_8$-Alkenylen oder den Rest einer aliphatischen gesättigten oder vorzugsweise ungesättigten Dicarbonsäure mit 2-18 C-Atomen bedeuten.

Bevorzugt sind vor allem solche Verbindungen der Formel II, worin $R^1$ oder/und $R^2$ mindestens eine ethylenische Doppelbindung enthält (enthalten), z.B. solche, worin $R^1$ $C_3$-$C_8$-Alkenyl, $C_3$-$C_5$-Alkenoyl, $C_3$-$C_8$-Alkenyloxy oder $C_3$-$C_8$-Alkenoyloxy-$C_1$-$C_4$-alkyl bedeuten und $R^2$ die oben angegebenen und bevorzugten Bedeutungen hat; ferner z.B. solche, in denen $R^2$ (für $n=1$) einen einwertigen Rest einer ungesättigten Carbonsäure (z.B. mit 3-5 C-Atomen, $\alpha,\beta$-ungesättigt, insbesondere (Meth)acryloyl) oder (für $n=2$) $C_4$-$C_{12}$-Alkenylen oder den Rest einer ungesättigten Dicarbonsäure (z.B. der Maleinsäure oder Fumarsäure) bedeuten und $R^1$ die unter Formel II angegebenen und bevorzugten Bedeutungen hat; sowie solche, in denen sowohl $R^1$ und $R^2$ jewils derartige ethylenisch ungesättigte Reste darstellen. Die letztgenannten Verbindungen werden insbesondere dann eingesetzt, wenn das Lichtschutzmittel in den Kern einpolymerisiert werden soll, da ein solches 2-fach ungesättigtes Piperidinderivat dann auch als Vernetzer dienen kann.

Beispiele für Tetraalkylpiperidin-Verbindungen der Formel II sind folgende:

1) 4-Stearoyloxy-1,2,2,6,6-pentamethylpiperidin
2) 4-Methacryloyloxy-1,2,2,6,6-pentamethylpiperidin
3) Di-(1-benzyl-2,2,6,6-tetramethylpiperidin-4-yl)-maleinat
4) Di-(1,2,2,6,6-pentamethylpiperidin-4-yl)-adipat
5) Di-(1,2,2,6,6-pentamethylpiperidin-4-yl)-sebacat
6) Di(1,2,3,6-tetramethyl-2,6-diethyl-piperidin-4-yl)-sebacat
7) Di(1-allyl-2,2,6,6-tetramethylpiperidin-4-yl)-phthalat
8) 1-Propargyl-4-$\beta$-cyanoethyloxy-2,2,6,6-tetramethylpiperidin
9) 1-Acetyl-2,2,6,6-tetramethylpiperidin-4-yl-acetat
10) Trimellithsäure-tri-(1,2,2,6,6-pentamethylpiperidin-4-yl)-ester
11) 1-Acryloyl-4-benzyloxy-2,2,6,6-tetramethylpiperidin

12) Dibutyl-malonsäure-di-(1,2,2,6,6-pentamethylpiperidin-4-yl)-ester
12a) 1-Benzyl-2,2,6,6-tetramethyl-4-(meth)acryloyloxy-piperidin
12b) 1,2,2,6,6-Pentamethyl-4-vinyloxy-piperidin
12c) 1-(Meth)acryloyl-4-(meth)acryloyloxy-2,2,6,6-tetramethylpiperidin
12d) 4-Crotonoyloxy-2,2,6,6-tetramethylpiperidin
12e) 1-Crotonyl-4-crotonoyloxy-2,2,6,6-tetramethylpiperidin
13) Dibenzyl-malonsäure-di-(1,2,2,6,6-pentamethylpiperidin-4-yl)-ester
14) Dibenzyl-malonsäure-di-(1,2,3,6-tetramethyl-2,6-diethyl-piperidin-4-yl)ester
15) Hexan-1′,6′-bis-(4-carbamoyloxy-1-n-butyl-2,2,6,6-tetramethylpiperidin)
16) Toluol-2′,4′-bis-(4-carbamoyloxy-1-n-propyl-2,2,6,6-tetramethylpiperidin)
17) Dimethyl-bis-(2,2,6,6-tetramethylpiperidin-4-oxy)-silan
18) Phenyl-tris-(2,2,6,6-tetramethylpiperidin-4-oxy)-silan
19) Tris-(1-propyl-2,2,6,6-tetramethylpiperidin-4-yl)-phosphit
20) Tris-(1-propyl-2,2,6,6-tetramethylpiperidin-4-yl)phosphat
21) Phenyl-[bis-(1,2,2,6,6-pentamethylpiperidin-4-yl)]-phosphonat
22) Di-(1,2,2,6,6-pentamethylpiperidin-4-yl)-sebacat
23) 4-Acryloyloxy-1,2,2,6,6-pentamethylpiperidin
24) 4-(Meth)acryloyloxy-1-[2-((meth)acryloyloxy)ethyl]-2,2,6,6-tetramethylpiperidin
25) 4-Acryloyloxy-1-[2-((meth)acryloyloxy)ethyl]-2,2,6,6-tetramethylpiperidin
26) 1-Acetyl-2,2,6,6-tetramethyl-4-(meth)acryloyloxy-piperidin

b) Verbindungen der Formel (III)

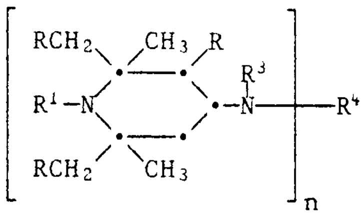

(III)

worin n die Zahl 1 oder 2 bedeutet, R und $R^1$ die unter a) angegebenen Bedeutungen und bevorzugten Bedeutungen haben, $R^3$ Wasserstoff, $C_1$-$C_{12}$ Alkyl, $C_5$-$C_7$ Cycloalkyl, $C_7$-$C_8$ Aralkyl, $C_2$-$C_{18}$ Alkanoyl, $C_3$-$C_5$ Alkenoyl oder Benzoyl ist und $R^4$, wenn n 1 ist, $C_1$-$C_{18}$ Alkyl, $C_3$-$C_8$ Alkenoyl, $C_5$-$C_7$ Cycloalkyl, mit einer Cyano-, Alkoxycarbonyl-oder Carbamidgruppe substituiertes $C_1$-$C_4$ Alkyl, Glycidyl oder eine Gruppe der Formel -CONH-Z ist, worin Z Wasserstoff, Methyl oder Phenyl bedeutet; wenn n 2 ist, $C_2$-$C_{12}$ Alkylen, $C_6$-$C_{12}$ Arylen, Xylylen, oder vorausgesetzt, dass $R^3$ nicht Alkanoyl, Alkenoyl oder Benzoyl bedeutet, $R^4$ auch einen zweiwertigen Rest einer (gesättigten oder ungesättigten) aliphatischen, cycloaliphatischen oder aromatischen Dicarbonsäure oder Dicarbaminsäure oder auch die Gruppe -CO- bedeuten kann, oder $R^3$ und $R^4$ zusammen, wenn n 1 ist, den zweiwertigen Rest einer (gesättigten oder ungesättigten) aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$Alkyl dar, so haben sie die bereits unter a) angegebene Bedeutung.

Bedeuten etwaige Substituenten $C_5$-$C_7$ Cycloalkyl, so stellen sie insbesondere Cyclohexyl dar.

Als $C_7$-$C_8$ Aralkyl ist $R^3$ insbesondere Phenylethyl oder vor allem Benzyl.

$R^3$ ist als $C_2$-$C_{18}$ Alkanoyl beispielsweise Propionyl, Butyryl, Octanoyl, Dodecanoyl, Hexadecanoyl, Octadecanoyl, aber bevorzugt Acetyl und als $C_3$-$C_5$ Alkenoyl insbesondere Acryloyl. Bedeutet $R_4$ $C_2$-$C_8$ Alkenyl, dann handelt es sich z.B. um Allyl, Methallyl, 2-Butenyl, 2-Pentenyl, 2-Hexenyl oder 2-Octenyl.

$R^4$ als mit einer Cyano-, Alkoxycarbonyl- oder Carbamidgruppe substituiertes $C_1$-$C_4$-Alkyl kann z.B. 2-Cyanethyl, Methoxycarbonylmethyl, 2-Ethoxycarbonylethyl, oder 2-(Dimethylaminocarbonyl)-ethyl sein.

Stellen etwaige Substituenten $C_2$-$C_{12}$ Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen, 4,4′-Diphenylen oder

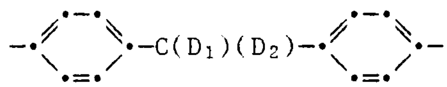

dar, worin $D_1$ und $D_2$ unabhängig voneinander Wasserstoff oder Methyl sind.

Als $C_6$-$C_{12}$ Cycloalkylen ist D insbesondere Cyclohexylen.

Zu erwähnen sind insbesondere solche Verbindungen der Formel III, worin R und $R^1$ die unter a) angegebenen bevorzugten Bedeutungen haben, $R^3$ Wasserstoff oder $C_1$-$C_6$-Alkyl und $R^4$, wenn n 1 ist, $C_1$-$C_{12}$-Alkyl, $C_3$-$C_8$-Alkenyl, mit Cyano oder Carbamido substituiertes $C_1$-$C_4$-Alkyl, CONH-Z; und wenn n 2 ist, $R^4$ die unter Formel III angegebenen Bedeutungen hat, mit Ausnahme der gemeinsamen Bedeutung $R^3 + R^4$.

Für Verbindungen der Formel III gelten sinngemäss die gleichen Bevorzugungen hinsichtlich der Substituenten mit ethylenischen Doppelbindungen wie für die Verbindungen der Formel II. Insbesondere sind dabei solche Verbindungen bevorzugt, in denen $R^3$ Wasserstoff oder $C_1$-$C_6$-Alkyl ist, $R^1$ die gleichen bevorzugten Bedeutungen wie in Formel II hat und $R^4$ die gleichen bevorzugten Bedeutungen wie $R^2$ in Formel II hat. Beispiele für Tetraalkylpiperidin-Verbindungen der Formel III sind folgende:

27) N,N'-Bis-(2,2,6,6-tetramethylpiperidin-4-yl)-hexamethylen-1,6-diamin
28) N,N'-Bis-(2,2,6,6-tetramethylpiperidin-4-yl)-hexamethylen-1,6-diacetamid
29) 1-Acetyl-4-(N-cyclohexylacetamido)-2,2,6,6-tetramethylpiperidin
30) 4-Benzoylamino-2,2,6,6-tetramethylpiperidin
31) N,N'-Bis-(2,2,6,6-tetramethylpiperidin-4-yl)-N,N'-dibutyladipamid
32) 1,2,2,6,6-Pentamethyl-4-maleinimido-piperidin
32a) 1-Acetyl-2,2,6,6-tetramethyl-4-maleinimido-piperidin
33) N,N'-Bis-(2,2,6,6-tetramethylpiperidin-4-yl)-p-xylylen-diamin
33a) 1-(Meth)acryloyl-4-(meth)acrylamido-2,2,6,6-tetramethylpiperidin
33b) 4-Crotonamido-2,2,6,6-tetramethylpiperidin
33c) 1-Crotonoyl-4-crotonamido-2,2,6,6-tetramethylpiperidin
34) 4-Methacrylamido-1,2,2,6,6-pentamethylpiperidin
35) 4-Acrylamido-1,2,2,6,6-pentamethylpiperidin
36) 4-(N-n-butyl)-acrylamido-1,2,2,6,6-pentamethylpiperidin
37) 4-(N-n-butyl)-methacrylamido-1,2,2,6,6-pentamethylpiperidin

c) Verbindungen der Formel (IV)

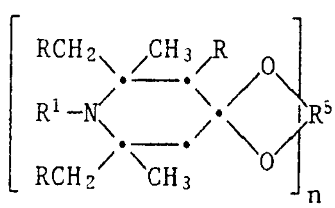

(IV)

worin n die Zahl 1 oder 2 bedeutet, R und $R^1$ die unter a) angegebenen Bedeutungen und bevorzugten Bedeutungen haben und $R^5$, wenn n 1 ist, $C_2$-$C_8$ Alkylen oder $C_4$-$C_{22}$ Acyloxyalkylen, wenn n 2 ist, die Gruppe $(-CH_2)_2C(CH_2-)_2$ bedeutet.

Bedeutet $R^5$ $C_2$-$C_8$-Alkylen, so stellt es beispielsweise Ethylen, 1-Methyl-ethylen, Propylen oder 2-Ethyl-propylen dar.

Als $C_4$-$C_{22}$ Acyloxyalkylen bedeutet $R^5$ z.B. 2-Ethyl-2-acetoxymethylpropylen.

$R^5$ bildet somit im Fall n = 2 die Ergänzung zu einem Spiro-6-Ring und im Fall n = 1 vorzugsweise die Ergänzung zu einem Spiro-5- oder 6-Ring.

Bezüglich des Substituenten $R^1$ gelten die gleichen Bevorzugungen wie in Formel II (Substituent mit ethylenischen Doppelbindungen).

Beispiele für Tetraalkylpiperidin-Verbindungen dieser Klasse sind folgende Verbindungen:

38) 9-Aza-8,8,10,10-tetramethyl-1,5-dioxaspiro[5.5]undecan
39) 9-Aza-8,8,10,10-tetramethyl-3-ethyl-1,5-dioxaspiro[5.5]undecan
40) 8-Aza-2,7,7,8,9,9-hexamethyl-1,4-dioxaspiro[4.5]decan
41) 9-Aza-3-ethyl-3-acetoxymethyl-9-acetyl-8,8,10,10-tetramethyl-1,5-dioxaspiro[5.5]undecan

42) 2,2,6,6-Tetramethylpiperidin-4-spiro-2′-(1′,3′-dioxan)-5′-spiro-5″-(1″,3″-dioxan)-2″-spiro-4‴-(2‴,2‴,6‴,6‴-tetramethylpiperidin),

sowie diese Verbindungen, die in 1-Stellung mit den unter Formel II genannten ethylenisch ungesättigten Resten substituiert sind.

d) Verbindungen der Formeln VA, VB und VC

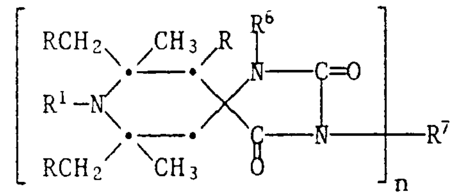

(VA)

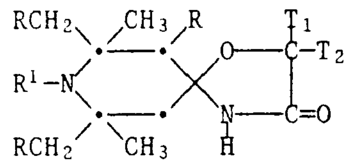

(VB)

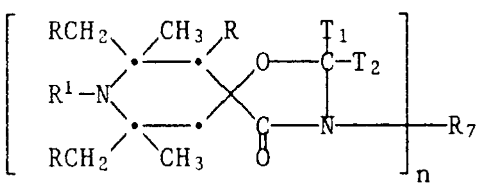

(VC)

worin n die Zahl 1 oder 2 bedeutet, R und $R^1$ die unter a) angegebenen Bedeutungen und bevorzugten Bedeutungen haben, $R^6$ Wasserstoff, $C_1$-$C_{12}$ Alkyl, Allyl, Benzyl, Glycidyl oder $C_2$-$C_6$ Alkoxyalkyl ist und $R^7$, wenn n 1 ist, Wasserstoff, $C_1$-$C_{12}$ Alkyl, $C_3$-$C_5$ Alkenyl, $C_7$-$C_9$ Aralkyl, $C_5$-$C_7$ Cycloalkyl, $C_2$-$C_6$ Alkoxyalkyl, $C_6$-$C_{10}$ Aryl, Glycidyl oder eine Gruppe der Formel $-(CH_2)_p-COO-Q$ oder der Formel $-(CH_2)_p-O-CO-Q$ ist, worin p 1 oder 2 und Q $C_1$-$C_4$ Alkyl oder Phenyl sind, wenn n 2 ist, $C_2$-$C_{12}$ Alkylen, $C_4$-$C_{12}$ Alkenylen, $C_6$-$C_{12}$ Arylen oder eine Gruppe $-CH_2CH(OZ')CH_2-(OCH_2-CH(OZ')CH_2)_2-$ bedeutet, worin Z′ $C_1$-$C_{18}$ Alkyl, $C_3$-$C_8$-Alkenyl, Benzyl, $C_2$-$C_{12}$ Alkanoyl $C_3$-$C_8$-Alkenoyl oder Benzoyl ist, $T_1$ und $T_2$ unabhängig voneinander Wasserstoff, $C_1$-$C_{18}$ Alkyl oder gegebenenfalls durch Halogen oder $C_1$-$C_4$ Alkyl substituiertes $C_6$-$C_{10}$ Aryl oder $C_7$-$C_9$ Aralkyl bedeuten oder $T_1$ und $T_2$ zusammen mit dem sie bindenden C-Atom einen $C_5$-$C_{12}$ Cycloalkanring bilden.

Bedeuten etwaige Substituenten $C_1$-$C_{12}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$ Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$ Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt $R^7$ $C_3$-$C_5$ Alkenyl dar, so bedeutet es z.B. 1-Propenyl, Allyl, Methallyl, 2-Butenyl oder 2-Pentenyl.

Als $C_7$-$C_9$ Aralkyl sind $R^7$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Als $C_6$-$C_{10}$ Aryl bedeuten $R^7$, $T_1$ und $T_2$ insbesondere Phenyl, α- oder β-Naphthyl, die gegebenenfalls mit Halogen oder $C_1$-$C_4$ Alkyl substituiert sind.

Stellt $R^7$ $C_2$-$C_{12}$ Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$-$C_{12}$ Alkenylen bedeutet $R^7$ insbesondere 2-Butenylen, 2-Pentenylen oder 3-Hexenylen.

Bedeutet $R^7$ $C_6$-$C_{12}$ Arylen, so stellt es beispielsweise o-, m- oder p-Phenylen, 1,4-Naphthylen oder 4,4′-Diphenylen dar.

Bedeutet Z′ $C_2$-$C_{12}$ Alkanoyl oder $C_3$-$C_8$-Alkenoyl, so stellt es beispielsweise Propionyl, Butyryl, Octanoyl, Dodecanoyl, aber bevorzugt Acetyl, Acryloyl oder Methacryloyl dar.

Bevorzugt unter den Verbindungen der Formeln VA, VB und VC werden ebenfalls solche eingesetzt, in denen mindestens einer der Substituenten eine ethylenische Doppelbindung enthält. Siehe auch die Bevorzugungen für $R^1$ in Formel II.

Beispiele für Tetraalkylpiperidin-Verbindungen dieser Klasse sind folgende Verbindungen:

43) 3-Benzyl-1,3,8-triaza-7,7,9,9-tetramethylspiro[4.5]decan-2,4-dion

44) 3-n-Octyl-1,3,8-triaza-7,7,9,9-tetramethylspiro[4.5]decan-2,4-dion

45) 3-Allyl-1,3,8-triaza-1,7,7,9,9-pentamethylspiro[4.5]decan-2,4-dion

46) 3-Glycidyl-1,3,8-triaza-7,7,8,9,9-pentamethylspiro[4.5]decan-2,4-dion

47) 2-Iso-propyl-7,7,9,9-tetramethyl-1-oxa-3,8-diaza-4-oxo-spiro[4.5]decan

48)2,2-Dibutyl-7,7,9,9-tetramethyl-1-oxa-3,8-diaza-4-oxo-spiro[4.5]decan

49) 2,2,4,4-Tetramethyl-7-oxa-3,20-diaza-21-oxo-dispiro[5.1.11.2]heneicosan

50) 2-Butyl-7,7,9,9-tetramethyl-1-oxa-4,8-diaza-3-oxo-spiro[4.5]decan

51) 8-Acetyl-3-dodecyl-1,3,8-triaza-7,7,9,9-Tetramethylspiro[4,5]decan-2,4-dion

51a) 1,3,8-Triaza-2,4-dioxo-3-acryloyloxyethyl-7,7,8,9,9-pentamethyl-spiro[4,5]decan

oder die Verbindungen der folgenden Formeln:

52) 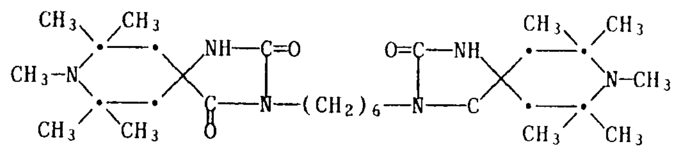

53) 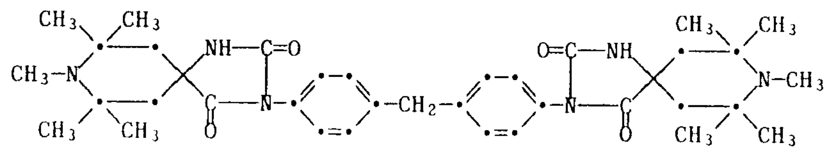

54) 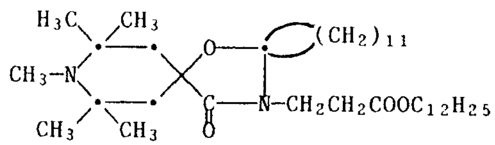

55) 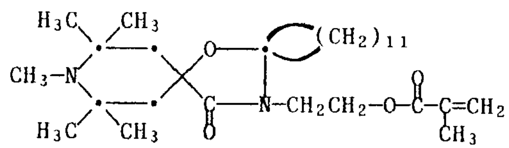 ,

sowie die vorstehend genannten Verbindungen, die an Stelle des Alkylsubstituenten am Piperidin-Stickstoff einen der in Zusammenhang mit Formel II konkret genannten ethylenisch ungesättigten Substituenten ($R^1$) enthält.

e) Verbindungen der Formel VI

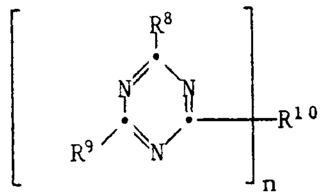

(VI),

worin n die Zahl 1 oder 2 ist und $R^8$ eine Gruppe der Formel

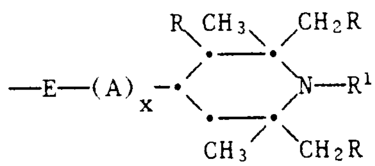

bedeutet, worin R und $R^1$ die unter a) angegebenen Bedeutungen und bevorzugten Bedeutungen haben, E -O- oder $-NR^{11}-$ ist, A $C_2$-$C_6$-Alkylen oder $-(CH_2)_3-O-$ und x die Zahlen 0 oder 1 bedeuten, $R^9$ gleich $R^8$ oder eine der Gruppen $-NR^{11}R^{12}$, $-OR^{13}$, $-NHCH_2OR^{13}$ oder $-N(CH_2OR^{13})_2$ ist, $R^{10}$, wenn n = 1 ist, gleich $R^8$ oder $R^9$, und wenn n = 2 ist, eine Gruppe -E-B-E- ist, worin B gegebenenfalls durch $-N(R^{11})$-unterbrochenes $C_2$-$C_6$ Alkylen bedeutet, $R^{11}$ $C_1$-$C_{12}$ Alkyl, Cyclohexyl oder Benzyl oder eine Gruppe der Formel

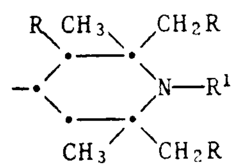

ist, $R^{12}$ $C_1$-$C_{12}$ Alkyl, Cyclohexyl, Benzyl, und $R^{13}$ $C_1$-$C_{12}$ Alkyl oder Phenyl bedeuten oder $R^{11}$ und $R^{12}$ zusammen $C_4$-$C_5$-Alkylen oder -Oxaalkylen, beispielsweise

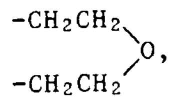

oder eine Gruppe der Formel

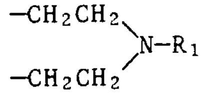

sind oder auch $R^{11}$ und $R^{12}$ jeweils eine Gruppe der Formel

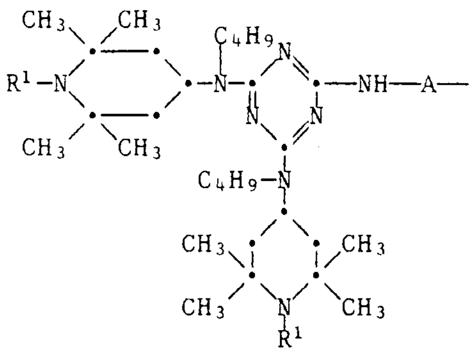

bedeuten.

Bedeuten etwaige Substituenten $C_1$-$C_{12}$ Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeutet A $C_2$-$C_6$ Alkylen, so stellt es beispielsweise Ethylen, Propylen, 2,2-Dimethylpropylen, Tetramethylen oder Hexamethylen dar.

Stellen $R^{11}$ und $R^{12}$ zusammen $C_4$-$C_5$ Alkylen oder Oxaalkylen dar, so bedeutet dies z.B. Tetramethylen, Pentamethylen oder 3-Oxapentamethylen.

Auch für Verbindungen der Formel VI gilt, dass solche mit ethylenische Doppelbindungen enthaltenden Substituenten bevorzugt sind. Siehe sinngemäss die Bevorzugungen unter Formel II.

Beispiele für Tetraalkylpiperidin-Verbindungen dieser Klasse sind die Verbindungen der folgenden Formeln:

56) 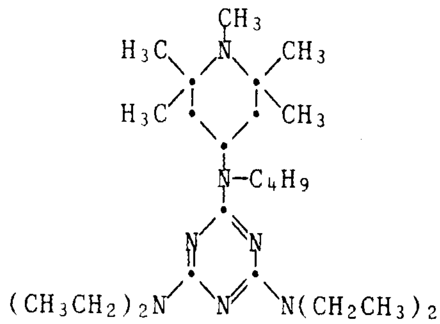

57) 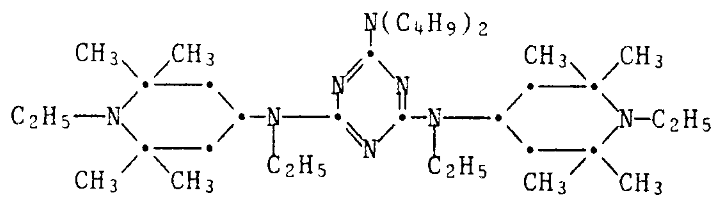

58) 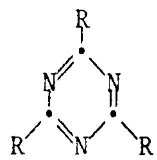 mit R = 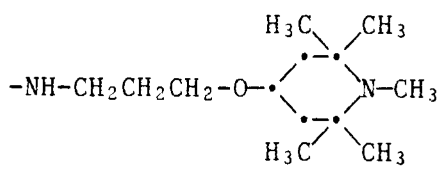

59) und 60) 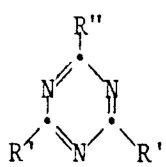 mit R' = 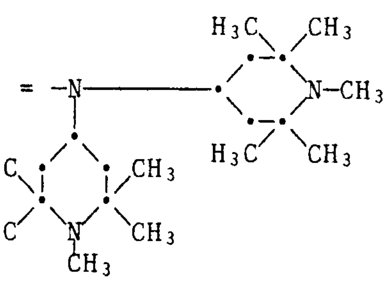

und R" = $-N(C_4H_9)_2$ oder 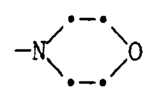

61)

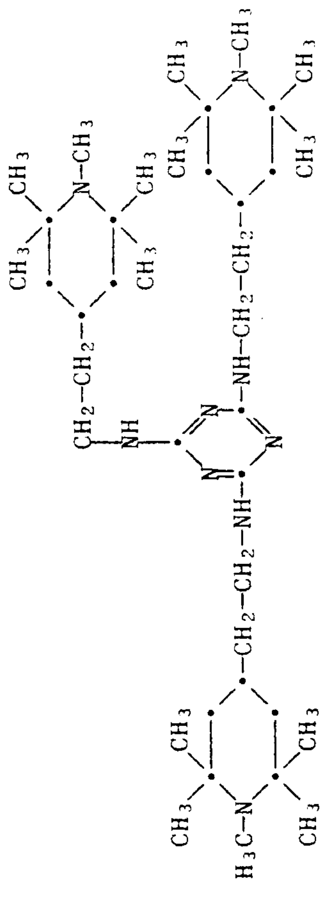

62)

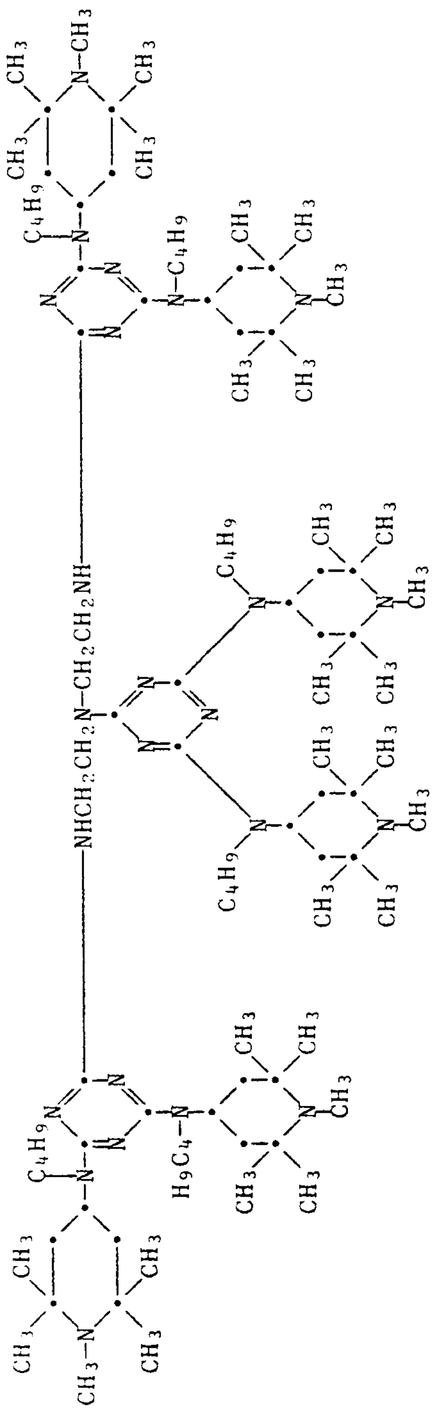

63) 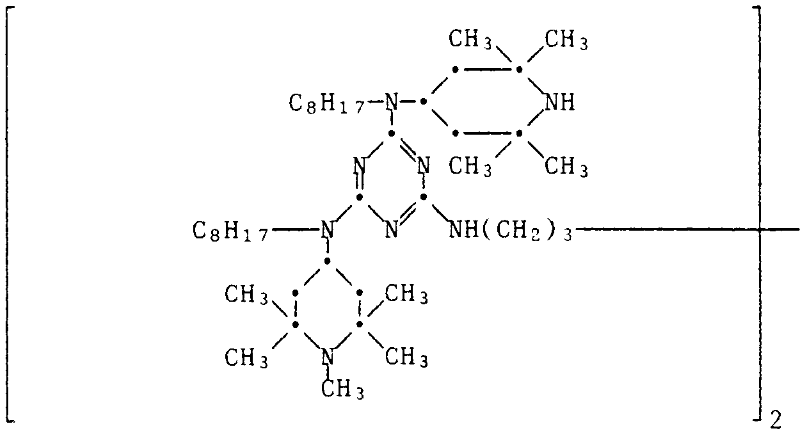

(64) 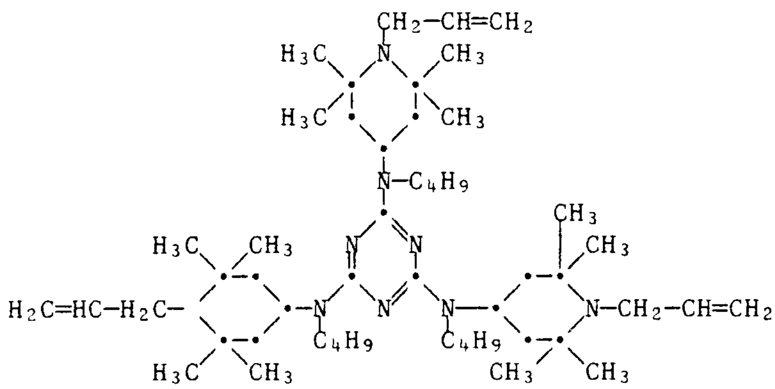 ,

sowie die Verbindungen 56-63, die an Stelle der Methylgruppe am Piperidin-Stickstoff einen ethylenisch ungesättigten Substituenten tragen, wie sie konkret unter der Definition von $R^1$ unter Formel II angegeben sind.

f) Oligomere oder polymere Verbindungen, deren wiederkehrende Struktureinheit einen 2,2,6,6-Tetraalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

Beispiele für 2,2,6,6-Tetraalkylpiperidin-Lichtschutzmittel dieser Klasse sind die Verbindungen der folgenden Formeln, wobei m eine Zahl von 2 bis 200 bedeutet.

65)

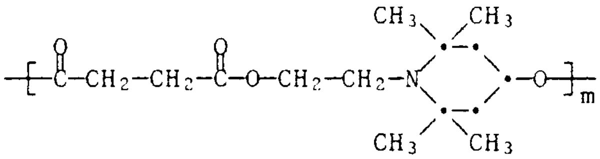

66)

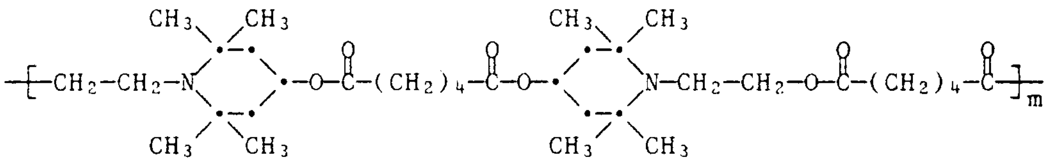

67)

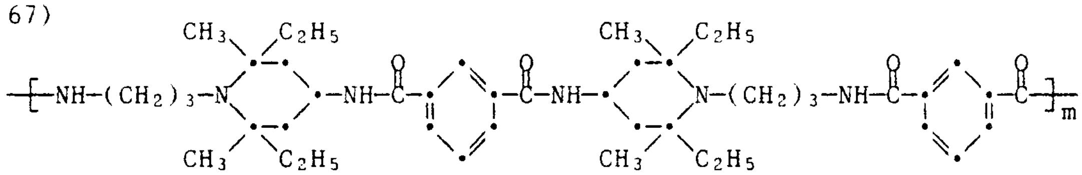

68)

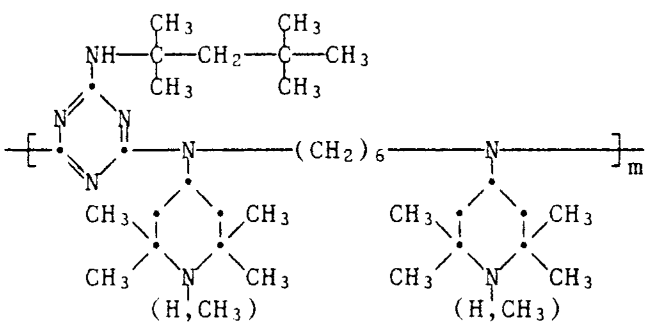

69)

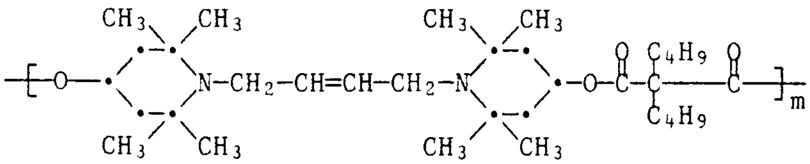

70)

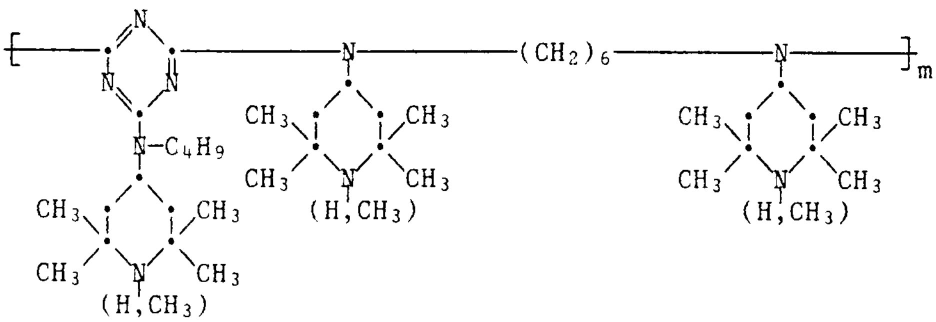

71)

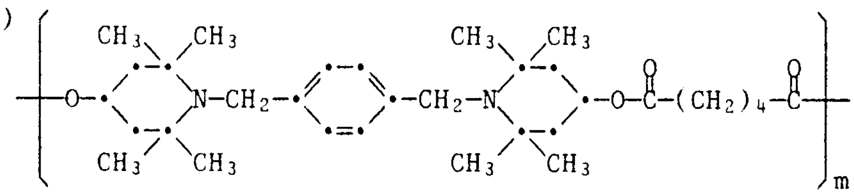

72)

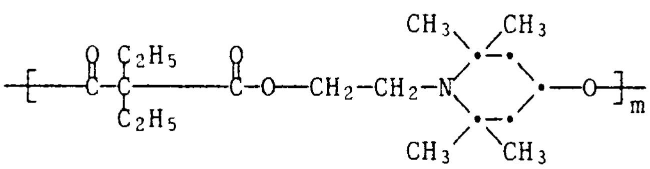

73)

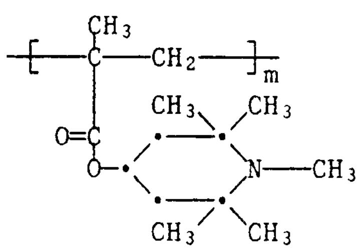

74)

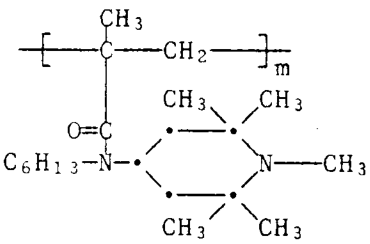

75)

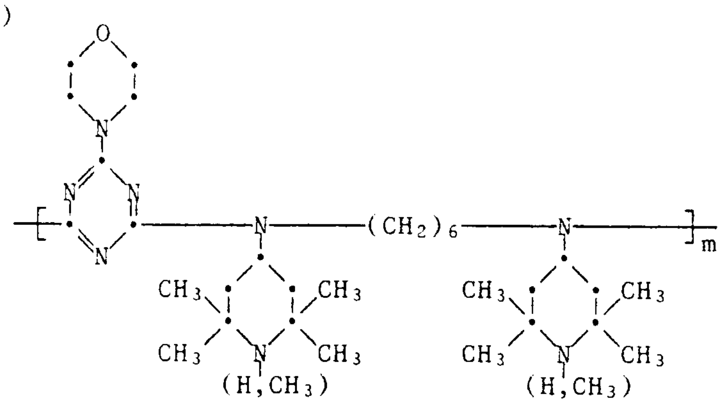

76)

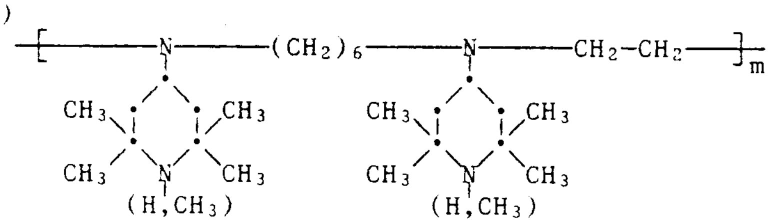

77)

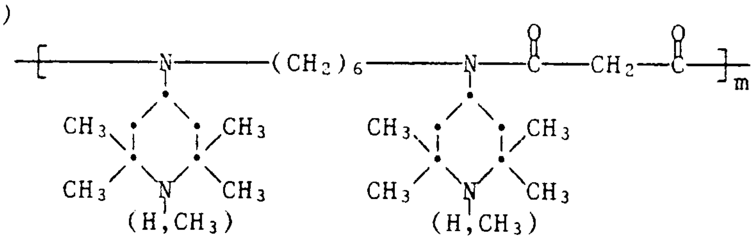

Wie bereits erwähnt, sind bevorzugte sterisch gehinderte Amine solche, die ethylenisch ungesättigte Gruppen wie z.B. Allyl-, Vinyl-oder Maleinatgruppen, insbesondere jedoch Acryl- oder Methacrylgruppen, enthalten, die mit den Monomeren copolymerisieren. Daher sind jene Verbindungen der in den vorstehenden Kapiteln a) bis f) definierten Formeln erfindugnsgemäss bevorzugt einsetzbar, die in mindestens einem der Substituenten eine ethylenische Doppelbindung enthalten. Diese kann z.B. im Substituenten $R^1$ oder/und im Substituenten in 4-Stellung des Piperidinringes sein. Beispiele für solche Verbindungen sind die zuvor aufgeführten Verbindungen 2, 3, 7, 11, 12a, 12b, 12c, 12d, 12e, 23, 24, 26, 32, 32a, 33a, 33b, 33c, 34, 35, 36, 37, 45, 51a

In besonderen Fällen kann es von Vorteil sein, ein Gemisch von sterisch gehinderten Aminen zu verwenden.

Die Lichtschutzmittel der Klasse der sterisch gehinderten Amine sind z.B. aus der EP-A 114 784 bekannt und können nach bekannten Verfahren hergestellt werden.

Die neben dem Typ der gehinderten Amine ebenfalls wichtige Gruppe von Lichtschutzmitteln sind die UV-Absorber, die verschiedenen Verbindungsklassen angehören. Auch die UV-Absorber eignen sich zur erfindungsgemässen Stabilisierung von Polymermikropartikeln. Die erste Klasse von solchen UV-Absorben sind die 2-(2-Hydroxyphenyl)benztriazole, von denen sich folgende Strukturtypen für die erfindungsgemässen Polymermikropartikel besonders eignen:

A) Verbindungen der Formel VII

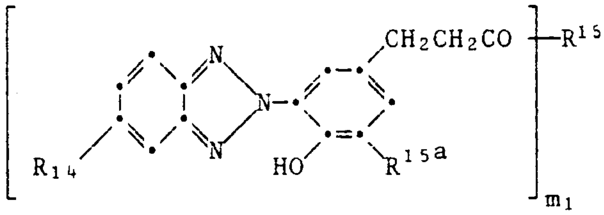 (VII),

in der $R^{14}$ H, Cl, $C_1$-$C_4$ Alkyl oder $C_1$-$C_4$ Alkoxy (vorzugsweise H),

$R^{15a}$

Wasserstoff, $C_1$-$C_{18}$-Alkyl, Cyclohexyl, $C_3$-$C_8$-Alkenyl, $C_7$-$C_{15}$-Aralkyl, Cl oder

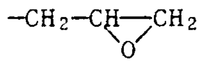

und
$m_1$ eine der Zahlen 1 oder 2 bedeuten und in der $R^{15}$
a) im Falle von $m_1$ = 1
$-OR^{16}$ oder

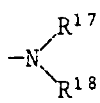

und
b) im Falle von $m_1$ = 2 einen der zweiwertigen Reste $-O-R^{23}-O-$ oder

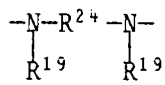

darstellt, wobei $R^{16}$ $C_1$-$C_{18}$-Alkyl, $C_5$-$C_{12}$-Cycloalkyl, geradkettiges oder verzweigtes $C_2$-$C_{18}$-Alkenyl, $C_6$-$C_{14}$-Aryl, $C_7$-$C_{15}$-Alkaryl, $C_7$-$C_{15}$-Aralkyl oder

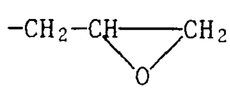,

bedeutet,
$R_{17}$ und $R_{18}$ unabhängig voneinander H, geradkettiges oder verzweigtes $C_1$-$C_{18}$-Alkyl, durch -O- oder $-NR^{19}$- ein- oder mehrfach unterbrochenes geradkettiges oder verzweigtes $C_3$-$C_{18}$-Alkyl, $C_5$-$C_{12}$-Cycloalkyl, $C_6$-$C_{14}$-Aryl, $C_7$-$C_{15}$-Alkaryl oder $C_7$-$C_{15}$-Aralkyl oder geradkettiges oder verzweigtes $C_3$-$C_8$-Alkenyl bedeuten oder aber $R^{17}$ und $R_{18}$ zusammen mit dem N-Atom, an das sie gebunden sind, einen Pyrrolidin-, Piperidin-, Piperazin- oder Morpholinring darstellen,
$R^{19}$ H oder geradkettiges oder verzweigtes, $C_1$-$C_{18}$-Alkyl ist,
$R^{22}$ geradkettiges oder verzweigtes $C_1$-$C_{18}$-Alkyl oder $C_3$-$C_{18}$-Alkenyl, $C_5$-$C_{12}$-Cycloalkyl, $C_6$-$C_{14}$-Aryl, $C_7$-$C_{15}$ Aralkyl oder $C_7$-$C_{15}$ Alkaryl ist,
$R^{23}$ $C_2$-$C_{12}$-Alkylen oder $C_4$-$C_8$-Alkenylen, $C_4$-Alkinylen, Cyclohexylen, durch -O- ein- oder mehrfach

unterbrochenes, geradkettiges oder verzweigtes $C_4$-$C_{18}$-Alkylen,
$R^{24}$ geradkettiges oder verzweigtes, gegebenenfalls durch -O- ein-oder mehrfach unterbrochenes $C_2$-$C_{12}$-Alkylen, Cyclohexylen,

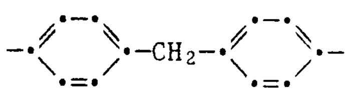

oder

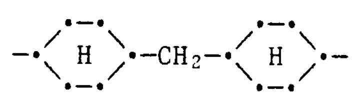

bedeuten, oder aber
$R^{24}$ und $R^{19}$ zusammen mit den beiden Stickstoffatomen einen Piperazinring darstellen.

Besonders zu erwähnen sind solche Verbindungen der Formel VII, in denen $R^{14}$ -$OR^{16}$ bzw. -O-$R^{23}$-O- sind, und von diesen vor allem jene, in denen $R^{16}$ Alkyl oder Alkenyl bzw. $R^{23}$ Alkylen oder Alkenylen oder durch O ein- oder mehrfach unterbrochenes Alkylen, z.B.

$$-CH_2(CH_2OCH_2)_{r_1}CH_2-$$

mit $r_1$ = 1 bis 9 bedeuten.

$R^{14}$ kann als Alkylrest, z.B. Methyl, Ethyl, Propyl, i-Propyl, Butyl und tert.-Butyl, als Alkoxyrest z.B. Methoxy, Ethoxy, Propoxy und Butoxy bedeuten.

$R^{16}$, $R^{17}$, $R^{18}$, $R^{19}$, $R^{21}$ und $R^{22}$ können z.B. folgende Alkylreste bedeuten: Methyl, iso-Propyl, n-Butyl, sec.-Butyl, tert.-Butyl, tert.-Amyl, 2-Ethylhexyl, n-Octyl, 1,1,3,3-Tetramethylbutyl, n-Dodecyl, 1,1,7,7-Tetramethyloctyl, n-Octadecyl.

$R^{17}$ und $R^{18}$ können z.B. folgende $C_3$-$C_{18}$-Alkylreste, welche durch -S-,-O- oder -$NR^{19}$- unterbrochen sind, bedeuten:
Methoxyethyl, Ethoxyethyl, Butoxyethyl, Butoxypropyl, Methylthioethyl,
$CH_3OCH_2CH_2OCH_2CH_2$-, $CH_3CH_2OCH_2CH_2OCH_2CH_2$-, $C_4H_9OCH_2CH_2OCH_2CH_2$-, Dodecyloxypropyl,
-$CH_2CH_2$-NH-$C_4H_9$, -$CH_2CH_2CH_2$NH-$C_8H_{17}$

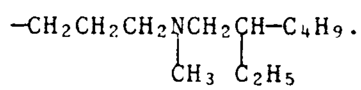

$R^{16}$, $R^{17}$, $R^{18}$ und $R^{22}$ können z.B. folgende $C_5$-$C_{12}$ Cycloalkylreste bedeuten: Cyclopentyl, Cyclohexyl, Cyclooctyl oder Cyclododecyl.

$R^{17}$ und $R^{18}$ können z.B. folgende Alkenylreste bedeuten: Allyl, Methallyl, 2-n-Hexenyl, 4-n-Octenyl.

Wenn $R^{16}$ Alkenyl bedeutet, so kann es dieselbe Bedeutung wie $R^{17}$ und $R^{18}$ als Alkenylreste haben, es kann aber auch z.B. -CH = $CH_2$, 10-n-Undecenyl oder 9-n-Octadecenyl darstellen.

$R^{16}$, $R^{17}$, $R^{18}$, $R^{21}$ und $R^{22}$ können unabhängig voneinander z.B. folgende $C_7$-$C_{15}$-Aralkylreste bedeuten: Benzyl, $\alpha$-Phenylethyl, $\beta$-Phenylethyl, 4-tert.-Butylbenzyl.

$R^{16}$, $R^{17}$, $R^{18}$ und $R^{22}$ können unabhängig voneinander z.B. folgende $C_6$-$C_{14}$-Arylreste bedeuten: Phenyl, $\alpha$-Naphtyl, $\beta$-Naphthyl.

Stehen $R^{16}$, $R^{17}$, $R^{18}$, $R^{21}$ oder $R^{22}$ für $C_7$-$C_{15}$-Alkaryl, so kann es sich um einen Tolyl-, Xylyl-, Ethylphenyl-, Isopropylphenyl-, n-Butylphenyl-, tert.-Butylphenyl-, Octylphenyl-, di-tert. Butylphenyl- oder Nonylphenylrest handeln.

Hat $R^{21}$ die Bedeutung -$SO_2$-$C_1$-$C_4$-Alkyl, so kann es sich bei dem Alkyl um einen Methyl-, Ethyl-, n-Propyl-, Isopropyl- oder n-, sec.- oder tert.-Butylrest handeln.

Steht $R^{21}$ für -$SO_2$-$C_6$-$C_{14}$-Aryl, so hat das Aryl z.B. die Bedeutung Phenyl, $\alpha$- oder $\beta$-Naphthyl.

Bei $R^{21}$ als -$SO_2$-$C_7$-$C_{18}$-Alkaryl hat das Alkaryl unabhängig die zuvor für $R_{16}$ beschriebenen Bedeutungen.

$R^{23}$ und $R^{25}$ können als $C_2$-$C_8$-Alkylen z.B. folgende Reste bedeuten: Ethylen, Propylen, Butylen, Hexylen, Octylen.

$R^{24}$ kann als Alkylen unabhängig die Bedeutung von $R^{23}$ haben oder aber zusätzlich auch noch höhermolekulare Gruppen, wie Decylen, Dodecylen darstellen.

Ist $R^{23}$ ein $C_4$-$C_8$-Alkenylen, so kommt z.B. folgende Gruppe in Betracht: Butenylen.

Als durch -O- unterbrochene, geradkettige oder verzweigte $C_4$-$C_{10}$-Alkylengruppen kommen im Falle $R^{23}$ und $R^{25}$ z.B. die folgenden Gruppen in Frage:
$-CH_2CH_2OCH_2CH_2-$

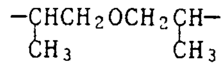

$-CH_2CH_2OCH_2CH_2OCH_2CH_2-$ $-CH_2CH_2OCH_2CH_2OCH_2CH_2OCH_2CH_2-$.

Typische Vertreter von Verbindungen der Formel VII, in der m die Zahl 1 bedeutet, sind die folgenden:
2-[2-Hydroxy-3-$R_0$-5-(2-carbomethoxyethyl)-phenyl]-benztriazol
2-[2-Hydroxy-3-$R_0$-5-(2-carbomethoxyethyl)-phenyl]-5-chlorbenztriazol
2-[2-Hydroxy-3-$R_0$-5-(2-carbocyclohexyloxyethyl)-phenyl]-benztriazol
2-[2-Hydroxy-3-$R_0$-5-(2-carbooctyloxyethyl)-phenyl]-benztriazol
2-{2-Hydroxy-3-$R_0$-5-[2-carbo-(2-ethylhexyloxy)-ethyl]-phenyl}-benztriazol
2-[2-Hydroxy-3-$R_0$-5-(2-carbo-iso-decyloxyethyl)-phenyl]-benztriazol
2-[2-Hydroxy-3-$R_0$-5-(2-carbododecyloxyethyl)-phenyl]-benztriazol
2-[2-Hydroxy-3-$R_0$-5-(2-carbododecyloxyethyl)-phenyl]-5-chlorbenztriazol
2-[2-Hydroxy-3-$R_0$-5-(2-carbooctyloxyethyl)-phenyl]-5-chlorbenztriazol
2-[2-Hydroxy-3-$R_0$-5-[2-carbo-(2-ethylhexyloxy)-ethyl]-phenyl}-5-chlorbenztriazol
2-[2-Hydroxy-3-$R_0$-5-(2-carbopiperidylamidoethyl)-phenyl)-benztriazol
2-[2-Hydroxy-3-$R_0$-5-(2-carbomorpholinamidoethyl)-phenyl]-benztriazol

Typische Vertreter von Verbindungen der Formel VII, in der $m_1$ die Zahl 2 bedeutet, sind die folgenden:

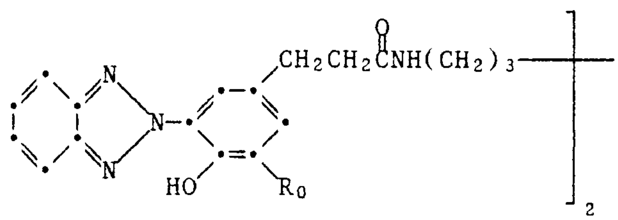

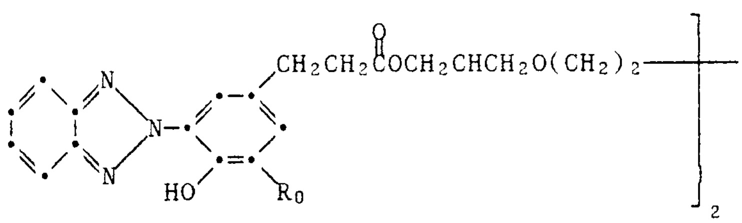

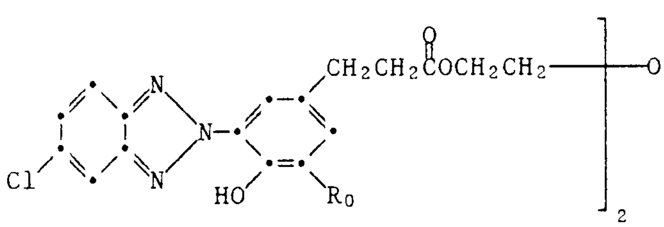

Weitere bevorzugte Verbindungen der Formel VII sind:
2-[2-Hydroxy-3-$R_0$-5-(2-carbo-n-octyloxyethyl)-phenyl]-benztriazol
2-{2-Hydroxy-3-$R_0$-5-(2-carbo-(2-ethylhexyl)-oxyethyl]-phenyl}-benztriazol

2-[2-Hydroxy-3-$R_0$-5-(2-carbo-n-octyloxylethyl)-phenyl]-5-chlorbenztriazol
2-{2-Hydroxy-3-$R_0$-5-(2-carbo-(2-ethylhexyl)-oxyethyl]-phenyl}-5-chlorbenztriazol
und die Verbindung der Formel

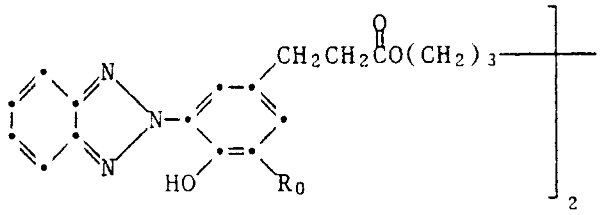

In allen vorstehenden Verbindungsnamen und Formeln bedeutet $R_0$ H, $CH_3$ oder t-Butyl.

In bestimmten Fällen kann es von Vorteil sein, ein Gemisch von zwei oder mehreren Verbindungen der Formel VII zu verwenden. Ein Beispiel hierfür ist ein Gemisch von
2-[2-Hydroxy-3-tert.butyl-5-(2-carbo-n-octyloxyethyl-phenyl]-5-chlorbenztriazol und
2-{2-Hydroxy-3-tert.butyl-5-(2-carbo-(2-ethylhexyl)-oxyethyl]-phenyl}-5-chlorbenztriazol, die im Gewichtsverhältnis 1:1 vorliegen.

B) Verbindungen der Formel VIII

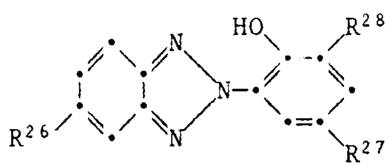

(VIII),

worin $R^{26}$ H, Chlor oder Carboxy ist,
$R^{27}$ für geradkettiges oder verzweigtes, gegebenenfalls substituiertes $C_1$-$C_{18}$-Alkyl, $C_7$-$C_{15}$ Aralkyl, $C_2$-$C_3$ Alkenyl oder die Gruppe

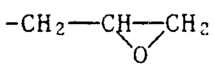

steht und
$R^{28}$ H ist oder unabhängig die Bedeutung von $R^{27}$ hat.

$R^{27}$ und $R^{28}$ als gegebenenfalls substituiertes $C_1$-$C_{18}$-Alkyl können hierbei unabhängig voneinander die zuvor für $R^{16}$ angegebenen Bedeutungen haben.

Bedeuten $R^{27}$ und $R^{28}$ $C_7$-$C_{15}$-Aralkyl, so können die Reste unabhängig voneinander z.B. Benzyl, α-Phenylethyl, β-Phenylethyl, α,α-Dimethylbenzyl oder 4-tert.-Butylbenzyl bedeuten.

Beispiele für geeignete Verbindungen der Formel VIII sind

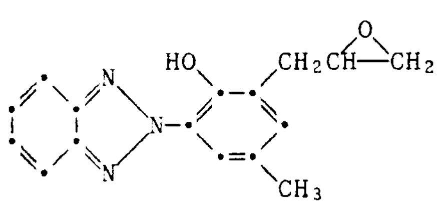

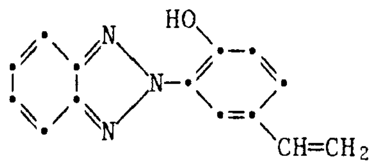

C) Verbindungen der Formel IX

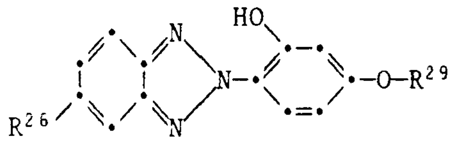

(IX),

worin $R^{26}$ die zuvor genannte Bedeutung hat und
$R^{29}$ geradkettiges oder verzweigtes, gegebenenfalls durch Epoxy-Gruppen substituiertes $C_1$-$C_{18}$-Alkyl, welches gegebenenfalls ein-oder mehrfach mit -O- unterbrochen sein kann,

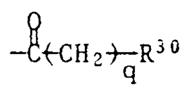 , 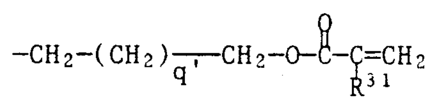

oder $CH_2-(CH_2)_{q'}-CH_2-COOR_0'$

ist,
q eine ganze Zahl von 1 bis 12 darstellt,

$R^{30}$ 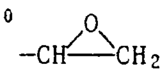

bedeutet und
$R^{31}$ für Wasserstoff oder Methyl,
$q^1$ für 0 oder 1 stehen und $R_0'$ $C_1$-$C_{18}$-Alkyl oder ω-(Meth)acryloyloxy-$C_1$-$C_{18}$-alkyl ist.

Hierbei ist $R^{29}$ als substituiertes $C_1$-$C_{18}$-Alkyl bevorzugt mit Epoxy-Gruppen und besonders bevorzugt mit einer Epoxy-Gruppe substituiert.

Ein Beispiel für geeignete Lichtschutzmittel der Formel IX ist:

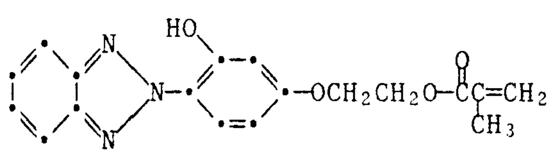

D) Verbindungen der Formel X

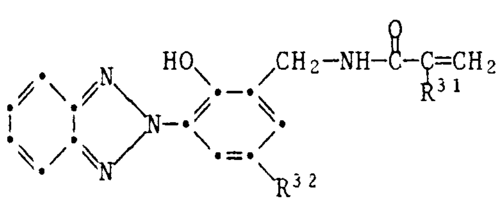

(X),

worin $R^{31}$ die zuvor angegebene Bedeutung hat und
$R^{32}$ Wasserstoff oder geradkettiges oder verzweigtes $C_1$-$C_{18}$-Alkyl ist.

$R^{32}$ als $C_1$-$C_{18}$-Alkyl kann hierbei die zuvor für $R^{16}$ angegebenen Bedeutungen haben und ist bevorzugt unsubstituiertes $C_1$-$C_{12}$-Alkyl. Beispiele für 2-(2-Hydroxyphenyl)benztriazole dieses Strukturtyps sind:

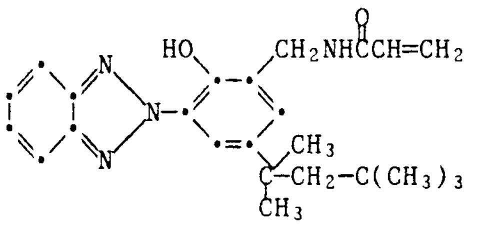
,

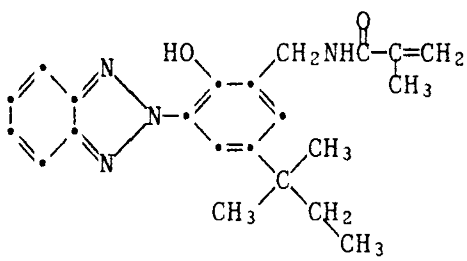

sowie die Verbindungen vorstehender Formeln, worin in p-Stellung zur Hydroxylgruppe an Stelle der t-Alkylreste H oder $CH_3$ steht.
E) Verbindungen der Formel XI

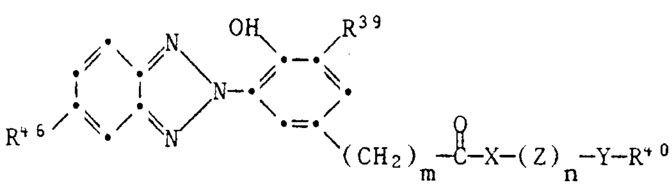
(XI)

worin

| | |
|---|---|
| X | -O- oder -N($R^{41}$)- bedeutet, und |
| Y | -O- oder -N($R^{42}$)- ist, und |
| Z | $C_2$-$C_{12}$Alkylen, durch ein bis drei -N($R^{47}$)-Gruppen und/oder Sauerstoff-Atome unterbrochenes $C_4$-$C_{12}$Alkylen, Butenylen, Butinylen, Cyclohexylen oder Phenylen bedeutet, und |
| m | die Zahl 0, 1 oder 2 ist und |
| n | 1, und falls X und Y -N($R^{41}$)- bzw. -N($R^{42}$) sind, auch 0 bedeutet, und |
| $R^{46}$ | Wasserstoff, Chlor, $C_1$-$C_4$Alkyl oder $C_1$-$C_4$ Alkoxy (vorzugsweise Wasserstoff) ist, und |
| $R^{39}$ | Wasserstoff oder $C_1$-$C_{18}$Alkyl, $C_7$-$C_{15}$Aralkyl, $C_3$-$C_5$Alkenyl oder Cyclohexyl bedeutet, und |
| $R^{40}$ | eine Gruppe -C(O)-C($R^{43}$) = C(H)$R^{44}$ ist, oder falls Y -N($R^{42}$)-ist, zusammen mit $R^{42}$ eine Gruppe -C(O)-CH = CH-C(O)-bildet, wobei $R^{43}$ Wasserstoff oder Methyl ist, und $R^{44}$ Wasserstoff, Methyl oder -C(O)-X-$R^{45}$ bedeutet, wobei $R^{45}$ Wasserstoff, $C_1$-$C_{12}$Alkyl oder eine Gruppe der Formel |

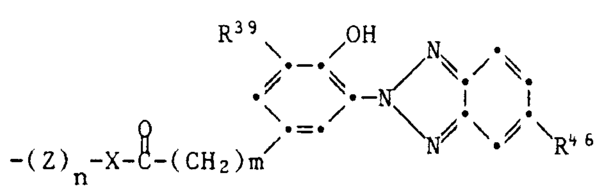

bedeutet,

worin die Symbole $R^{46}$, $R^{39}$, X, Z, m und n die oben angegebene Bedeutung haben, und

$R^{41}$, $R^{42}$ und $R^{47}$ unabhängig voneinander Wasserstoff, $C_1$-$C_{12}$Alkyl, durch 1 bis 3 Sauerstoffatome unterbrochenes $C_3$-$C_{12}$Alkyl, Cyclohexyl oder $C_7$-$C_{11}$Aralkyl bedeuten, und $R^{41}$ ferner zusammen mit $R^{42}$, falls Z Ethylen ist, auch Ethylen bilden.

Bevorzugt ist in Formel XI $R^{46}$ Wasserstoff oder Cl, X O oder NH, vor allem 0, m 2, n 1, Z $C_2$-$C_6$-Alkylen, Cyclohexylen oder Phenylen, Y O oder NH, vor allem O, $R^{40}$ -C(O)-C($R^{43}$) = C(H)$R^{44}$ mit $R^{44}$ = Wasserstoff oder Methyl.

Beispiele für Benztriazole der Formel XI sind:

3-(2H-Benzotriazol-2-yl)-4-hydroxy-5-$R_0$-benzolpropansäure(2-(meth)acrylyloxy)-cyclohexylester,
3-(5-Chlor-2H-benzotriazol-2-yl)-4-hydroxy-5-$R_0$-benzolpropansäure-(2-(meth)acrylyloxy)-cyclohexylester,
N-(2-(Meth)acrylyloxyethyl)-3-(2H-benzotriazol-2-yl)-4-hydroxy-5-$R_0$-benzolpropanamid,
N-(2-(Meth)acrylyloxyethyl)-3-(5-chlor-2H-benzotriazol-2-yl)-4-hydroxy-5-$R_0$-benzol-propanamid,
N-(3-(Meth)acrylyloxypropyl)-3-(2H-benzotriazol-2-yl)-4-hydroxy-5-$R_0$-benzolpropanamid,
3-(2H-Benzotriazol-2-yl)-4-hydroxy-5-$R_0$-benzolpropansäure-(2-(meth)acrylyloxy)-propylester,
3-(2H-Benzotriazol-2-yl)-4-hydroxy-5-$R_0$-benzolpropansäure-(2-(meth)acrylyloxy)-butylester,
3-(2H-Benzotriazol-2-yl)-4-hydroxy-5-$R_0$-benzolpropansäure-(2-(meth)acrylyl-2-phenyl)-äthylester,
3-(2H-Benzotriazol-2-yl)-4-hydroxy-5-$R_0$-benzolpropansäure-(2-(meth)acrylyl-3-phenoxy)-propylester und
N-(2-(4-Methoxy-1,4-dioxo-cis-but-2-en-1-yloxy)-ethyl)-3-(2H-benzotriazol-2-yl)-4-hydroxy-5-$R_0$-benzol-propanamid.

In den vorstehenden Verbindungensnamen steht $R_0$ für H, $CH_3$ oder t-Butyl, wobei H und $CH_3$ bevorzugt sind.

F) Verbindungen der Formel XIa

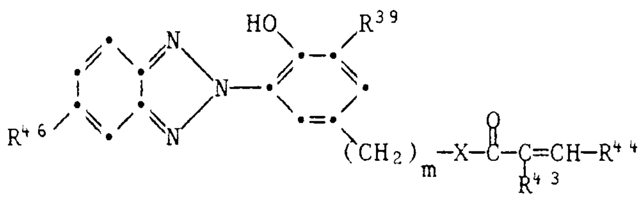

,

worin die allgemeinen Symbole wie in Formel XI definiert sind. Für die Verbindungen der Formel XIa gelten sinngemäss die gleichen Bevorzugungen wie für jene der Formel XI.

G) Verbindungen Der Formel XII

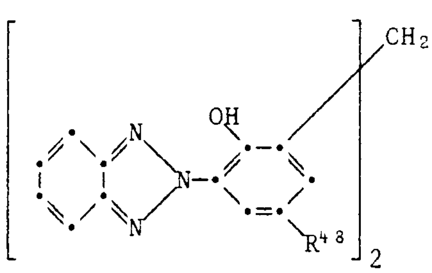

(XII)

worin $R^{48}$ gegebenenfalls substituiertes $C_1$-$C_{18}$-Alkyl, $C_7$-$C_{15}$-Aralkyl oder $C_2$-$C_3$-Alkenyl bedeutet.

$R^{48}$ als gegebenenfalls substituiertes Alkyl kann dabei z.B. die oben für $R^{16}$ angegebenen Bedeutungen haben.

Die als Lichtschutzmittel für die Mikropartikel in Frage kommenden 2-(2-Hydroxyphenyl)-benztriazole sind bekannt oder können nach an sich bekannten Methoden, z.B. gemäss der EP-A 57 160, der EP-A-133165 und anderer, dem Fachmann ekannter Dokumente betreffend 2-(2-Hydroxyphenyl)-benztriazole hergestellt werden. Die in dieser Anmeldung beschriebenen Lichtschutzmittel (Piperidin-Lichtschutzmittel und UV Absorber) sind grösstenteils auch in der EP-A-226538 beschrieben.

Einen weiteren Typ von geeigneten Lichtschutzmitteln aus der Gruppe der UV-Absorber stellen 2-Hydroxybenzophenone dar, die z.B. eine Struktur gemäss Formel XIII

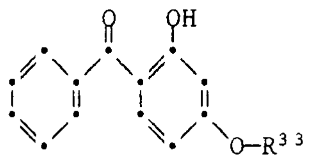

(XIII)

aufweisen, worin $R^{33}$ für geradkettiges oder verzweigtes, gegebenenfalls einfach oder mehrfach durch -O- unterbrochenes und gegebenenfalls Epoxy-Gruppen substituiertes $C_1$-$C_{18}$-Alkyl oder für

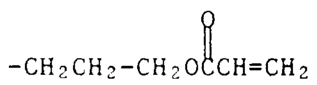

oder

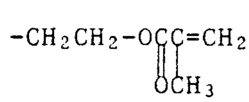

steht.

Beispiele für geeignete 2-Hydroxybenzophenone sind das 4-Methoxy-, 4-Octyloxy-, 4-Decyloxy- oder 4-Dodecyloxyderivat, wobei diese mit Epoxygruppen substituiert sein können.

Weitere Klassen von geeigneten UV-Absorbern umfassen 2,4-Bis-(2′-hydroxyphenyl)-6-alkyl-s-triazine wie z.B. das 6-Ethyl-, 6-Heptadecyl- oder 6-Undecylderivat sowie Oxalsäurediamide, insbesondere Oxalsäuredianilide, wie z.B. 4,4′-Di-octyloxy-oxanilid, 2,2′-Di-octyloxy-5,5′-di-tert.butyl-oxanilid, 2,2′-Di-dodecyloxy-5,5′-di-tert.butyl-oxanilid, 2-Ethoxy-2′-ethyl-oxanilid, N,N′-Bis-(3-di-methylaminopropyl)-oxalamid, 2-Ethoxy-5-tert.butyl-2′-ethyl-oxanilid und dessen Gemisch mit 2-Ethoxy-2′-ethyl-5,4′-di-tert.butyl-oxanilid, Gemische von o- und p-Methoxy- sowie von o- und p-Ethoxy-di-substituierten Oxaniliden.

Als Lichtschutzmittel für die Mikropartikel kommen weiterhin Zimtsäurederivate der Formel XIV

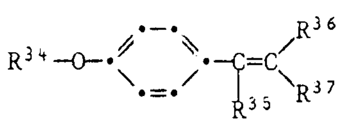

(XIV),

in Frage, wobei $R^{34}$ für geradkettiges oder verzweigtes gegebenenfalls durch -O- unterbrochenes $C_1$-$C_{18}$-Alkyl steht, $R^{35}$ Wasserstoff, $C_1$-$C_4$-Alkyl, Methoxy oder Phenyl bedeutet, und $R^{36}$ und $R^{37}$ unabhängig voneinander Cyano- oder -C(O)O$R^{38}$- Gruppen sind und $R^{38}$ für geradkettiges oder verzweigtes gegebenenfalls durch -O- unterbrochenes $C_1$-$C_{18}$-Alkyl steht. Beispiele für geeignete Zimtsäurederivate sind $\alpha$-Cyan-$\beta$,$\beta$-diphenylacrylsäureethylester bzw. -iso-octylester, $\alpha$-Carbomethoxyzimtsäuremethylester, $\alpha$-Cyano-$\beta$-methoxyzimtsäuremethylester.

Wie bereits früher erwähnt, sind solche Lichtschutzmittel bevorzugt, die in der erfindungsgemässen Polymermikropartikeln chemisch verankert werden können, also einpolymerisiert werden. Generell trifft dies auf Lichtschutzmittel zu, insbesondere auf jene der vorstehend definierten Klassen, die mindestens einen reaktiven Substituenten mit mindestens einer ethylenischen Doppelbindung, enthalten.

Generell werden als Lichtschutzmittel die 2,2,6,6-Tetraalkylpiperidinderivate (insbesondere jene in den obigen Abschnitten a) bis f) genannten) sowie die 2-(2-Hydroxyphenyl)-benztriazole sowie Mischungen dieser beiden Typen von Lichtschutzmitteln (insbesondere jene in den obigen Abschniten A) bis F) genannten), bevorzugt eingesetzt. Besonders zu erwähnen sind dabei die Verbindungen der Formeln II, III, IV, VA-VC und VI (insbesondere jene der Formeln II, III, VA und VI) sowie der Formeln VII, IX, X, XI und XIa. Ganz besonders bevorzugt setzt man Verbindungen vom Typ der Formeln II, III und XI ein.

Da Protonen abspaltende Substituenten die Gruppentransferpolymerisation stören können, werden für durch Gruppentransferpolymerisation herstellbare erfindungsgemässe Mikropartikel zweckmässig solche Lichtschutzmittel eingesetzt, die keine derartigen Gruppen, z.B. -OH, COOH- oder andere Säuregruppen, enthalten. Es kommt jedoch auf die Stellung solcher Gruppen im Molekül an, ob sie die genannte Wirkung aufweisen. Die OH-Gruppe im Phenylrest der 2-(2-Hydroxyphenyl)-benztriazol-UV-Absorber stören die Polymerisation nicht oder nur wenig, je nach der weiteren Substitution, insbesondere dann nicht, wenn in ortho-Stellung zur OH-Gruppe keine tertiären Substituenten stehen. Aber auch Verbindungen mit den letztgenannten können zur Stabilisierung der erfindungsgemässen Mikropartikel eingesetzt werden, insbesondere zur Stabilisierung der "Arme", in die sie z.B. endständig eingebaut werden.

Aus den vorstehend genannten Gründen sind auch gehinderte Amine (insbesondere die Piperidinverbindungen mit mindestens einer Gruppe der Formel I, z.B. wie sie in den Abschnitten a) bis f) definiert sind; siehe auch Formeln II bis VI) erfindungsgemäss bevorzugt, die am gehinderten N-Atom (also z.B. am Piperidin-N-Atom) einen von H verschiedenen Substituenten tragen. Allerdings können die erfindungsgemässen Mikropartikel auch mit am N-Atom unsubstituierten gehinderten Aminen ausgeführt werden. Die gehinderten Amine sollten, wie erwähnt, vorzugsweise keine OH- und COOH-Gruppen enthalten.

Das (die) Lichtschutzmittel wird (werden) im erfindungsgemässen Verfahren in einer Menge von 0,1 bis 30 Gew.-% und bevorzugt 0,5 bis 10,0 Gew.-%, jeweils bezogen auf die Monomeren des jeweiligen Polymerisationsschrittes, zugegeben. Die Zugabe kann zu Beginn, gemeinsam mit den Monomeren, kontinuierlich während, oder gegen Ende des Polymerisationsvorganges erfolgen. So wird eine gleichmässige Verteilung des (der) Lichtschutzmittel(s) in den Mikropartikeln bzw. eine Anreicherung in den äusseren Schichten erreicht. Dadurch wird gewährleistet, dass das (die) Lichtschutzmittel je nach seiner (ihrer) Natur physikalisch oder chemisch in den resultierenden Polymermikropartikel verankert ist. Bevorzugt weist das Lichtschutzmittel reaktive Gruppen, z.B. Ester-, Epoxy-, Isocyanat-, Amino- oder Amidgruppen oder insbesondere ethylenische Doppelbindungen, z.B. in (Meth)acrylat-oder Vinylgruppen, auf, mit deren Hilfe es chemisch an das Polymer gebunden werden kann und gegebenenfalls direkt an der Polymerisation teilnehmen kann wie bereits weiter oben erklärt.

Ein weiterer Gegenstand der Erfindung sind Dispersionen, die die erfindungsgemässen Polymermikropartikel enthalten. Für praktische Zwecke werden die Mikropartikel nicht als solche isoliert, sondern werden in dem Lösungsmittel, in dem die Polymerisation bzw. die Desaktivierung der "lebenden" Gruppen stattfand, oder in einem anderen Dispersionsmedium als Dispersion weiterverarbeitet. Als Dispersionsmittel kommen insbesondere aromatische, aliphatische und cycloaliphatische Kohlenwasserstoffe, aber auch andere, z.B. Wasser, in Betracht. Beispiele für Kolenwasserstoffe sind Benzol, Toluol und vor allem höher siedende aliphatische Kohlenwasserstofffraktionen, z.B. mit einem Siedebereich von 100-200 °C. Die erfindungsgemässen Dispersionen enthalten die Mikropartikel z.B. in einer Menge von 10 bis 90 %, insbesondere 20 bis 80 % z.B. 40 bis 80 %, bezogen auf die Dispersion.

Ein weiterer Gegenstand der Erfindung sind Beschichtungszusammensetzungen, in denen das filmbildende Material

a) 1 bis 95 Vol-% einer dispersen Phase, die erfindungsgemässe Mikropartikel enthält und
b) 99 bis 5 Vol-% einer flüssigen kontinuierlichen Phase mit einer Viskosität von 0,1 bis 30 Poise bei Raumtemperatur, die dazu fähig ist, in ein filmbildendes Polymer zu härten,

enthält, wobei das Gesamtvolumen von a) und b) 100% beträgt und die disperse Phase vorzugsweise an der Lackhärtung teilnimmt. Die Phase b) kann dabei ebenfalls ein oder mehrere Lichtschutzmittel enthalten. Die disperse Phase enthält vorzugsweise mindestens 50 Vol-% Mikropartikel.

Bevorzugt sind Beschichtungszusammensetzungen, in denen das filmbildende Material 5 bis 85, z.B. 15 bis 85, Vol-% der dispersen Phase, die mindestens 50 Vol-% erfindungsgemässe Mikropartikel enthält, und 95-15, z.B. 85-15, Vol-% der flüssigen kontinuierlichen Phase, die bei Raumtemperatur eine Viskosität von 0,1 bis 20 Poise aufweist, enthält.

Generell können dabei die Mikropartikel entweder wie ein Additiv einem fertigen Lack zugesetzt werden; oder sie können an Stelle eines entsprechenden Anteils der Lackkomponenten, z.B. der Acrylat- oder Polyesterkomponente eines Lackes, eingesetzt werden. Im letzteren Fall können die Mikropartikel an der Härtung des Lackes teilnehmen (als reaktive Komponente).

Die disperse Phase kann ausschliesslich aus Polymermikroteilchen bestehen; bevorzugt enthält die disperse Phase jedoch ausser den Mikropartikeln und gegebenenfalls Lösungsmittel noch Pigment-, Füllstoff und/oder Streckmittelteilchen, wie diese üblicherweise in Beschichtungszusammensetzungen verwendet werden. Diese Teilchen weisen mit Vorteil eine in der Beschichtungstechnik übliche Grösse von z.B. 0,1 bis 5 $\mu$m auf.

Die Polymermikroteilchen, Pigment-, Füllstoff- und/oder Streckmittelteilchen sind zweckmässig in einem entflockten Zustand in der flüssigen kontinuierlichen Phase stabil dispergiert, was z.B. mit Hilfe bekannter Pigmentdispergiermittel erreicht werden kann. Alternativ kann das flüssige filmbildende Material in der kontinuierlichen Phase oder eine chemische Variante davon selbst ein wirksames Dispergiermittel sein.

Die Dispergierung des Pigments kann in der in der Beschichtungstechnik üblichen Weise z.B. unter Verwendung von Kugelmühlen, Perlmühlen, Reibemühlen oder Kolloidalmühlen erfolgen.

Die disperse Phase ist vorzugsweise in der Lage, an der Lackhärtung teilzunehmen, was voraussetzt, dass entweder der Mikropartikelkern oder der Dispergiermittel-Teil oder beide chemisch reaktive Gruppen aufweisen, mit Hilfe derer sie an einer Härtungsreaktion teilnehmen können. Geht die Fähigkeit zur Teilnahme an der Härtungsreaktion von dem Dispergiermittel-Teil aus, so bestizt dieses entsprechende reaktive Gruppen, z.B. Hydroxy- oder Carboxygruppen, die sich im solvatisierten Polymerteil oder in dem

Teil des Moleküls, der als Ankerkomponente für die Mikropartikel dient, befinden können.

Auf Grund der im vorstehenden Absatz beschriebenen Gegebenheiten kann das System disperse Phase/kontinuierliche Phase auch selbst ein Zweikomponentensystem bilden, d.h. dass die Filmbildung durch Reaktion der beiden Phasen miteinander zustande kommt.

Es ist daher ein Merkmal der erfindungsgemässen Polymermikropartikel, dass sie als Bestandteil von Beschichtungszusammensetzungen gegebenenfalls mittels zur Kondensationspolymerisation befähigter reaktiver Gruppen an deren Härtung teilnehmen können. Dies kann z.B. mit ethylenisch ungesättigten Monomeren erreicht werden, die z.B. Hydroxy- oder Carboxylgruppen enthalten. Beispiele sind Hydroxyalkylacrylate oder -methacrylate wie Hydroxyethylacrylat, Hydroxyisopropylmethaacrylat oder ungesättigte Carbonsäuren wie Acrylsäure oder Methacrylsäure.

Bei der anderen Komponente der erfindungsgemässen Beschichtungszusammensetzungen handelt es sich um die flüssige kontinuierliche Phase, welche in der Lage ist, mittels Additions- bzw. Kondensationspolymerisation zu einem Polymerfilm zu härten.

Unter Kondensationspolymerisation soll hierbei insbesondere die Polymerisation mittels Reaktion von Paaren von funktionellen Gruppen unter Bildung von funktionellen Einheiten, welche in den Monomeren nicht anwesend sind, verstanden werden, wobei die Reaktion gegebenenfalls mit der Entwicklung von niedermolekularen Beiprodukten verbunden sein kann.

Als Bestandteile der kontinuierlichen Phase eignen sich insbesondere härtbare oder duroplastische Harze, die mittels Erhitzen und/oder Zugabe eines Katalysators in ein filmbildendes Polymer verwandelt werden können. Beispiele für solche Harze sind:

1. Phenol-Formaldehyd-Harze, das Produkt der Umsetzung von Phenolen mit Formaldehyd.
2. Amino-Formaldehyd-Harze, z.B. Harnstoff-Formaldehyd- oder Melamin-Formaldehyd-Harze, erhältlich durch Reaktion von Harnstoff, Melamin oder anderen stickstoffhaltigen Verbindungen mit Formaldehyd.
3. Vernetzbare Acrylharze, die sich von substituierten Acrylsäureestern wie z.B. Epoxyacrylaten, Urethanacrylaten oder Polyesteracrylaten ableiten. Ferner Acrylharze, die keine olefinische Doppelbindung aufweisen, deren OH- oder/und COOH-Gruppen an der Kondensationsreaktion teilnehmen können.
4. Polyester- und Alkydharze
5. Polyurethan-Harze, die auf der Reaktion von Di- oder Polyisocyanaten mit Polyhydroxyverbindungen basieren.
6. Epoxidharze, z.B. solche, die durch Reaktion von Epichlorhydrin mit Bisphenol A erhalten werden.

Die kontinuierliche Phase kann prinzipiell aus einer einzigen flüssigen Substanz oder aus einem homogenen flüssigen Gemisch aus zwei oder mehreren Substanzen bestehen.

Bevorzugt ist ein Gemisch von zwei oder mehreren Substanzen, wobei dieses in Form eines Einkomponenten- oder Zweikomponentensystems vorliegen kann.

Handelt es sich bei der kontinuierlichen flüssigen Phase um ein Einkomponentensystem, so enthält diese die filmbildenden Bestandteile in lagerstabiler Form und die Härtung kann z.B. durch blosses Erhitzen erfolgen oder es wird ein Härter zugegeben.

Geeignete Einkomponenten-Systeme sind z.B. aus einem der genannten duroplastischen Harze und gegebenenfalls einer weiteren flüssigen Substanz, dem sogenannten Reaktivverdünner, der reaktive Gruppen enthält, mit deren Hilfe er an der Härtung des filmbildenden Materials teilnehmen kann, und der vor allem zur besseren Flexibilität des Lackfilms beiträgt, aufgebaut. Bei dem Reaktivverdünner handelt es sich beispielsweise um bifunktionelle Monomere oder Oligomere mit Molekulargewichten bis etwa 1000, die insbesondere OH-Gruppen, z.B. 2-6, enthalten. Beispiele hierfür sidn einfache Glykole oder Polyole wie Butan-1,4-diol, insbesondere aber hydroxyterminierte oligomere Ester von Polyalkoholen mit Polycarbonsäuren und/oder Monocarbonsäuren. Beispiele für geeignete Reaktivverdünner sind aus der EP-A 3166 ersichtlich.

Handelt es sich bei der kontinuierlichen flüssigen Phase um ein Zwei-Komponenten-System, so wird dieses erst kurz vor der Anwendung der fertigen Beschichtungszusammensetzung hergestellt, indem man zwei flüssige Komponenten, die wechselseitig reaktiv und ausserdem in der Lage sind, einen Film zu bilden, zusammenbringt.

Die zweite Komponente kann hierbei mit der ersten Komponente co-reagieren und so einen gehärteten Film bilden, wie es z.B. bei Zweikomponenten-Polyurethan-Lacken der Fall ist. Bei der zweiten Komponente kann es sich jedoch auch um einen Katalysator für die Härtungsreaktion der ersten Komponente handeln, wofür die säurekatalysierte Härtung von Aminoharzen ein Beispiel ist.

Erfindungsgemäss bevorzugte Beschichtungszusammensetzungen sind solche auf Basis eines vernetzbaren Acrylat-, Polyester/Alkyd- oder Polyurethan-Harzes, das gegebenenfalls mit Aminoplasten, Polyisocyanat oder Polyepoxiden vernetzt ist.

Als Spezialfall sei hier das weiter oben angeführte Zweikomponentensystem aus disperser und kontinuierlicher Phase angeführt, bei dem der Beschichtungsfilm durch Reaktion der beiden Phasen miteinander gebildet wird.

Die erfindungsgemässen Beschichtungszusammensetzungen können in der kontinuierlichen Phase einen Katalysator für die Lackhärtung enthalten, der je nach Natur des verwendeten filmbildenden Materials bevorzugt in einer Menge von 0,1 bis 15 Gew.-%, bezogen auf die gesamte kontinuierliche Phase inklusive eines gegebenenfalls anwesenden Reaktivverdünners, zugegeben wird.
Besteht die kontinuierliche Phase in der Hauptsache aus duroplastischen Harzen, handelt es sich bei dem Katalysator bevorzugt um einen sauren oder bei Erhitzen Säure abspaltenden Katalysator, z.B. Methansulfonsäure, Toluolsulfonsäure, Phosphorsäure, Halbester der Maleinsäure, Cyclohexylphosphonigsäure, Trichloressigsäure, Trifluoressigsäure, tetrahalogenphthalsäure und deren Halbester.

Die erfindungsgemässen Beschichtungszusammensetzungen können zusätzlich zu den filmbildenden Komponenten, der dispersen Phase und der flüssigen kontinuierlichen Phase, ein inertes flüssiges Verdünnungsmittel enthalten, z.B. bis zu 50, insbesondere 30 Vol-%, welches sich unter den Bedingungen des Aufbringens der Beschichtungszusammensetzung auf ein Substrat verflüchtigt.
Beispiele für geeignete inerte Lösungsmittel sind aromatische und aliphatische Kohlenwasserstoffe, halogenierte Kohlenwasserstoffe, niedere Alkohole oder Wasser.

Es kann wünschenswert sein, der Beschichtungszusammensetzung weitere Stoffe zuzugeben, die bestimmte Eigenschaften, z.B. das Fliessvermögen oder die Abhäsion auf einem substrat beeinflussen. Solche Additive, die im allgemeinen der kontinuierlichen Phase zugegeben werden, sind dem Fachmann bekannt.

Vorzugsweise besteht das filmbildende Material in den erfindungsgemässen Beschichtungszusammensetzungen aus 10 bis 80, z.B. 20 bis 80, Vol-% disperser Phase und 90 bis 20, z.B. 80-20 vol-% flüssiger kontinuierlicher Phase.

Die Aufbringung der erfindungsgemässen Beschichtungszusammensetzungen auf ein Substrat kann mit Hilfe aller herkömmlichen Verfahren geschehen, die dem Fachmann bekannt sind, z.B. durch Streichen, Besprühen, Tauchen oder elektrophoretisches Aufbringen. Die Beschichtungen und Lacke auf Basis der erfindungsgemässen Zusammensetzungen werden nach dem Auftragen getrocknet und eingebrannt.

Die Verwendung der erfindungsgemässen Beschichtungszusammensetzungen ist für alle Arten der industriellen Lackierung geeignet, wie z.B. für die Lackierung von Maschinen, Fahrzeugen, Schiffen oder Konstrutionsteilen. Von besonderer Bedeutung ist sie für die Fahrzeug-Lackierung. Hierbei kann es sich sowohl um Einschicht-Lackierung wie Mehrschicht-Lackierung handeln.

Beschichtungen und Lacke auf Basis der erfindungsgemässen Beschichtungszusammensetzungen zeichnen sich durch eine erhöhte Bewitterungsbeständigkeit, insbesondere eine besonders hohe Lichtstabilität aus.

Ein weiterer Gegenstand der Erfindung ist die Verwendung von erfindungsgemässen lichtstabilisierten Mikropartikeln als Bestandteil von Beschichtungszusammensetzungen.

In der im erfindungsgemässen Verfahren anfallenden Dispersion, die die erfindungsgemässen Polymermikropartikel enthält, fallen neben den eigentlichen Mikropartikeln (Kennzeichen: Grössenverteilung vorzugsweise 0,01-20 µm und Vernetzung) entsprechen, auch noch andere Anteile von Polymeren an, die keine Mikropartikel im obigen Sinn sind. Diese stören bei der Verwendung in Lackzusammensetzungen nicht, weshalb die erhaltenen Dispersionen in der Regel direkt eingesetzt werden können. Die Mikropartikel als solche können bei Bedarf aber auch isoliert bzw. von anderen Polymeranteilen gereinigt werden. Letzteres kann beispielsweise durch Umfällen in geeigneten Lösungsmitteln erfolgen, in denen die nicht vernetzten Anteile löslich sind. Man erhält auf diese Weise gereinigte Mikropartikel-Dispersionen, aus denen die Partikel selbst durch geeignete, an sich bekannte Methoden, z.B. durch Spritztrocknen, vor allem aber Gefriertrocknen, isoliert werden können. Die isolierten Mikropartikel können dann ebenfalls durch in der Polymerchemie übliche Methoden charakterisiert werden, z.B. mittels Lichtstreuungsmessungen, Rasterelektronenmikroskopie, Feststellung der Grössenverteilung, der Form usw. Wie bereits früher erwähnt, weisen die Mikropartikel eine im Idealfall kugel- bis eiförmige Gestalt auf. Isolierung und Charakterisierung von Polymermikropartikeln sind in der Literatur vielfach beschrieben, so z.B. von Funke et al., ProgrColloid Polymer Sci. 57, 48-53 (1975).

Die nachfolgenden Beispiele dienen der weiteren Erläuterung der verschiedenen Aspekte der vorliegenden Erfindung, stellen jedoch keine wie immer geartete Einschränkung des allgemein anwendbaren Prinzips der vorliegenden Erfindung dar. In den Beispielen beziehen sich, ebenso wie in der gesamten übrigen Beschreibung, Teile und Prozente auf das Gewicht, sofern nichts anderes angegeben ist. In den Herstellungsbeispielen ist die Isolierung der Mikropartikel als solche der Einfachheit halber nicht immer erwähnt. Sie kann in der vorstehend ausführlich beschreibenen Weise erfolgen.

## Beispiele

Beispiel 1 Stabilisierung der Mikropartikel in den "Armen".

Als Apparatur dient ein 1,5 l-Sulfierkolben, ausgerüstet mit Rührer, Rückflusskühler, Thermometer und zwei Gummimembran-Einlässen. Der Kolben wird unter Vakuum ausgeflammt und mit trockenem Argongas gefüllt. Danach füllt man, immer unter Argon, folgende Komponenten in den Sulfierkolben ein:

356 g (411 ml) 1,2-Dimethoxyethan

3,5 g (4,05 ml) 1-Methoxy-2-methyl-1-trimethylsiloxypropen

0,5 ml 0,05 molare Tetrabutylammoniumfluorid-trihydrat (TBAF)-Lösung in 1,2-Dimethoxyethan

Dieses Reaktionsgemisch wird unter Argon gerührt. Nun gibt man nach genauem Zeitplan (siehe unten) über zwei verschiedene Dosierpumpen durch die Gummimembraneinlässe die folgenden Komponenten in den Reaktionskolben:

| Komponenten | Zeit in Minuten Start der Zugabe | Zeit in Minuten Ende der Zugabe |
|---|---|---|
| I Gemisch aus 252 g Methylmethacrylat und 8,04 g 4-Methacryloyloxy-1,2,2,6,6-pentamethylpiperidin | 0 | 40 |
| II 16,6 g Ethylenglykol-dimethacrylat | 50 | 90 |

Während des Zutropfens von I steigt die Innentemperatur der Lösung durch Exothermie der Reaktion bis gegen 70 °C an. Beim Zutropfen von II ist keine zusätzliche Exothermie zu bemerken. Nach einer Gesamtreaktionszeit von 100 Minuten (10 Min. am Schluss ausrühren lassen) wird die Reaktion mit 6 ml Methanol abgebrochen. Man verdünnt nun die Mikropartikellösung, die relativ viskos geworden ist, mit 500 ml Essigester und fällt die Mikropartikel durch tropfenweises ausgiessen auf ca. 8 Liter Hexan.

Man erhält 208,9 g eines weissen Mikropartikelgranulates (Mikrogelgranulats), das abgesaugt, mit wenig Methanol und Hexan gewaschen, im Trockenschrank getrocknet und danach gemahlen wird. Die Mikropartikel sind in Essigester gut löslich und zeigen folgende Molekulargewichtswerte: $\overline{M}n$ = 3850, $\overline{M}w$ = 45450. Der Anteil des Lichtschutzmittels beträgt 3 %, bezogen auf den gesamten Festkörper.

Anstelle der gefällten Mikropartikel, die wie oben beschrieben, isoliert werden können, kann für die Lackapplikation auch die Lösung der lichtstabilisierten Mikropartikel in 1,2-Dimethoxyethan verwendet werden. Die durch GPC (Gelpermeationschromatographie) bestimmten $\overline{M}n$/$\overline{M}w$-Werte sind praktisch dieselben. Der Festkörpergehalt beträgt 43,5 %.

Beispiel 2 Stabilisierung der Mikropartikel in den "Kernen"

Nimmt man an Stelle des Gemisches I im Beispiel 1 252 g Methylmethacrylat und an Stelle des Vernetzers II 28,4 g des Piperidin-Lichtschutzmittels 1-[2-Methacryloyloxyethyl]-4-methacryloyloxy-2,2,6,6-tetramethylpiperidinund verfährt im übrigen gleich wie in Beispiel 1 beschrieben, so erhält man 243,8 g eines weissen, im Kern stabilisierten Mikrogels. Der Anteil des Stabilisators beträgt 10,1 %, bezogen auf den gesamten Festkörpergehalt. $\overline{M}n$ = 2750, $\overline{M}w$ = 47230.

Beispiel 3Stabilisierung der Mikropartikel in den "Kernen"

Man verwendet wieder 252 g Methacrylsäuremethylester statt der Mischung I gemäss Beispiel 1. An Stelle des Vernetzers II setzt man ein Gemisch ein bestehend aus

12,09 g Ethylenglykol-dimethacrylat und

8,04 g 1-[2-Methacryloyloxy-ethyl]-4-methacryloyloxy-2,2,6,6-tetramethylpiperidin

( = Gemisch III)

Im übrigen verfährt man gleich wie in Beispiel 1 beschrieben und erhält 233,2 g eines weissen, im Kern stabilisierten Mikrogels. Der Anteil des Stabilisators beträgt 3 %, bezogen auf den gesamten Festkörpergehalt. $\overline{M}n$ = 4120, $\overline{M}w$ = 40000.

Beispiel 4 Stabilisierung der Mikropartikel in den "Armen" und "Kernen"

Verwendet man das in Beispiel 1 beschriebene Gemisch I, sowie das in Beispiel 3 beschriebene Gemisch des Vernetzers (Gemisch III) und verfährt im übrigen gleich wie in Beispiel 1 beschrieben, so erhält man wiederum in weisses, im Kern und den Armen stabilisiertes Mikrogel. Der Anteil des Stabilisators beträgt 3 % im Kern und 3 % in den Armen, bezogen auf den gesamten Festkörpergehalt.
$\overline{M}n$ = 9994, $\overline{M}w$ = 25060.

Beispiel 5 Stabilisierung der Mikropartikel in den "Armen"

Verwendet man an Stelle des Gemisches I in Beispiel 1 das folgende Gemisch

252 g Methacrylsäuremethylester

8,04 g 4-(N-butyl)-acrylamido-1,2,2,6,6-pentamethylpiperidin (Verbindung 36)

und verfährt im übrigen gleich wie in Beispiel 1 beschrieben, so erhält man 234 g eines weissen, in den Armen stabilisierten Mikrogels. Der Anteil des Stabilisators beträgt 3 %, bezogen auf den gesamten Festkörpergehalt. $\overline{M}n$ = 19189, $\overline{M}w$ = 128921.

Beispiel 6 Stabilisierung der Mikropartikel in den "Armen"

Verwendet man an Stelle des Gemisches I in Beispiel 1 das folgende Gemisch

252 g Methacrylsäuremethylester

8,04 g 1-Acetyl-2,2,6,6-tetramethyl-4-methacryloyloxypiperidin (Verbindung 26)

und verfährt im übrigen gleich wie in Beispiel 1 beschrieben, so erhält man 225 g eines weissen, in den Armen stabilisierten Mikrogels. Der Anteil des Stabilisators beträgt 3 %, bezogen auf den gesamten Festkörpergehalt. $\overline{M}n$ = 4774, $\overline{M}w$ = 26257.

Beispiel 7:

Als Apparatur dient ein 2,5 l-Sulfierkolben, ausgerüstet mit Rührer, Rückflusskühler, Thermometer und Gummimembran-Einlass. Der Kolben wird unter Vakuum ausgeflammt und mit trockenem Argongas gefüllt. Danach füllt man, immer unter Argon, folgende Komponenten in den Sulfierkolben ein:

1189,00 g Ethylenglykoldimethylether

15,54 g Xylol

14,00 g 1-Trimethyl-siloxy-1-isobutoxy-2-methylpropen

Zu dieser Mischung gibt man mit einer Spritze durch die Gummimembran 100 µl einer 1,0 molaren Lösung von Tetrabutylammoniumbifluorid ($TBAHF_2$) in Ethylenglykoldimethylether.

Dieses Reaktionsgemisch wird unter Argon gerührt. Nun gibt man nach einem genauen Zeitplan (siehe unten) über zwei verschiedene Dosierpumpen durch die Gummimembran die folgenden Komponenten in den Reaktionskolben:

| Komponenten | Zeit in Minuten | |
|---|---|---|
| | Start der Zugabe | Ende der Zugabe |
| I 300 µl 1,0M $TBAHF_2$ und und 5,3 g Ethylenglykol-dimethylether | 0 | 90 |
| II Mischung aus: 844,4 g Methylmethacrylat und 18,0 g 4-Methacryloyloxy-1,2,2,6,6-pentamethyl-piperidin | 0 | 40 |
| III 55,8 g Ethylenglykol-di-methacrylat | 55 | 70 |

Nach einer Gesamtreaktionszeit von 100 Minuten wird die Reaktion mit 20 g Methanol abgebrochen.
Die entstehende Polymermikropartikeldispersion weist einen Festkörpergehalt von 43,5 % auf, enthaltend ca. 2 % Lichtschutzmittel, bezogen auf den gesamten Festkörpergehalt.

Beispiel 8 Stabilisierung der Mikropartikel in den "Armen

Die verwendete Apparatur und die Vorbereitung ist dieselbe wie in Beispiel 1 beschrieben. Unter Argon werden folgende Substanzen im Reaktionsgefäss vorgelegt:

170 g 1,2-Dimethoxyethan
1,7 ml 1-Methoxy-1-(trimethylsilocy)-1-propen
0,3 ml 0,05 molare Tris-(dimethylamino)-sulfoniumbifluorid ($TASHF_2$)-Lösung

Zur klaren farblosen Lösung lässt man nun, von zwei Dosimetern gesteuert, durch die Gummimembranen folgende Substanzen nach genauem Zeitplan zutropfen.

| Komponenten | Zeit in Minuten | |
|---|---|---|
| | Start der Zugabe | Ende der Zugabe |
| I 0,96 ml 0,05 m $TASHF_2$-Lösung | 0 | 60 |
| II 126 g Methylmethacrylat | 0 | 40 |
| III 8,3 g Aethylenglykol-dimethacrylat | 50 | 60 |
| IV 4,02 g 2-{2-Hydroxy-3-t-butyl-5-[2-(2-methacryloyloxy-cyclohexyloxycarbonyl)-ethyl]-phenyl}-benztriazol gelöst in 10 ml Dimethoxyethan | 70 | 80 |

Die Reaktion verläuft exotherm bis ca. 60 °C Innentemperatur. Nach 60 Minuten Reaktionszeit wird die Reaktionslösung deutlich viskoser. Bei Zugabe des UV-Absorbers wird die Lösung gelblich gefärbt. Nach einer totalen Reaktionszeit von 90 Minuten wird mit 10 ml Methanol abgebrochen. Sofort wird die gelbliche Reaktionslösung entfärbt. Die durch Ausfällen auf Hexan oder Methanol isolierten Mikropartikel zeigen im

UV-Spektrum eine deutliche Absorption bei 343 nm. Der UV-Absorbergehalt beträgt 3 %, bezogen auf den gesamten Festkörpergehalt. $\overline{M}n$ = 9751, $\overline{M}w$ = 21216.

Beispiel 9 Stabilisierung der Mikropartikel in den "Armen"

Verwendet man an Stelle von 4-Methacryloyloxy-1,2,2,6,6-pentamethylpiperidin in Beispiel 1 die gleiche Menge 2-{2-Hydroxy-3-methyl-5-[2-(2-methacryloyloxy-cyclohexyloxycarbonyl)-ethyl]-phenyl}-benztriazol und verfährt im übrigen genau gleich wie in Beispiel 1 beschrieben, so erhält man ebenfalls eine lichtstabilisierte Polymermikropartikeldispersion mit 3 % UV-Stabilisator, bezogen auf den Festkörpergehalt, die als solche für die Lackapplikation weiterverwendet wird.

Beispiel 10

Verwendet man an Stelle des UV-Absorbers in Beispiel 9 die gleiche Menge 2-{2-Hydroxy-5-[2-(2-methacryloyloxy-cyclohexyloxycarbonyl)-ethyl]-phenyl}-benzotriazol und verfährt analog wie in Beispiel 9 beschrieben, sor erhält man ebenfalls eine lichtstabilisierte Polymermikropartikeldispersion mit 3 % UV-Stabilisator, bezogen auf den Festkörpergehalt, die ebenfalls direkt für die Lackapplikation weiterverwendet wird.

Beispiel 11:

Verwendet man zusätzlich zu den 8,04 g 4-Methacryloyloxy-1,2,2,6,6-pentamethylpiperidin die gleiche Menge 2-{2-Hydroxy-3-methyl-5-[2-(2-methacryloyloxy-cyclohexyloxycarbonyl)-ethyl]-phenyl}-benztriazol, und verfährt im übrigen genau gleich wie in Beispiel 1 beschrieben, so erhält man ebenfalls eine lichtstabilisierte Polymermikropartikeldispersion, die je ca. 2 %, bezogen auf den Festkörpergehalt, an Benztriazol-UV-Absorber und 4-Methacryloyloxy-1,2,2,6,6-pentamethylpiperidin enthält.

Beispiel 12:

Es wird wieder die gleiche Apparatur mit den gleichen Vorbereitungen, wie in Beispiel 7 beschrieben, verwendet. In den Reaktionskolben gibt man unter Argon
700,0 g Tetrahydrofuran (THF) (über Kalium absolutiert)
5,0 g Xylol (absolut)
7,0 g 1-Trimethylsiloxy-1-methoxy-2-methylpropen

Zu dieser Mischung fügt man mit einer Spritze durch die Gummimembran 50 µl einer 1M Tris-(dimethylamino)-sulfoniumdifluorid-Lösung ($TASHF_2$) in Ethylenglykoldimethylether zu.

Danach wird unter Argon gerührt und man gibt nach einem genauen Zeitplan (siehe unten) die folgenden Komponenten zu:

| Komponenten | Zeit in Minuten | |
|---|---|---|
| | Start der Zugabe | Ende der Zugabe |
| I 40,7 g Hexandiol-dimethacrylat | 0 | 10 |
| II 400 µl 1,0 M $TASHF_2$-Lösung und 4,1 g THF | 0 | 90 |
| III Mischung aus: 199,5 g Methylmethacrylat und 4,0 g 4-Methacryloyloxy-1,2,2,6,6-pentamethyl-piperidin | 40 | 55 |
| IV Mischung aus: 255,8 g Butylacrylat und 5,2 g 4-Acryloyloxy-1,2,2,6,6-pentamethyl-piperidin | nach 85 Minuten die ganze Menge | |

Nach 2 Stunden Reaktionszeit wird die Polymerisation durch Zugabe von 10,0 g Methanol abgebrochen.
Man erhält eine Polymermikropartikeldispersion mit einem Festkörpergehalt von ca. 41,9 %, enthaltend 1,8 % Lichtschutzmittel, bezogen auf den gesamten Festkörpergehalt.

Beispiel 13

Man verfährt in analoger Weise wie in Beispiel 12 beschrieben. Es werden an Stelle der in Mischung III erwähnten 4 g Piperidinlichtschutzmittel folgende Stabilisatoren eingesetzt:

13a) 4-(N-butyl)-acrylamido-1,2,2,6,6-pentamethylpiperidin $\overline{M}n$ = 19199, $\overline{M}w$ = 128921.
13b) 1-Acetyl-2,2,6,6-tetramethyl-4-methacryloyloxy-piperidin $\overline{M}n$ = 4774, $\overline{M}w$ = 26257.
13c) 2-{2-Hydroxy-5-[2-(2-methacryloyloxy-cyclohexyloxycarbonyl)-ethyl]-phenyl}-benztriazol

Beispiel 14

Man verfährt wie in Beispiel 12 beschrieben, setzt jedoch an Stelle des Vernetzers I ein Gemisch aus
32,7 g Hexandiol-dimethacrylat und
8 g 1-[2-methacryloyloxyäthyl]-4-methacryloyloxy-2,2,6,6-tetramethylpiperidin und an Stelle der Mischung IV
255,8 g Butylacetat
ein.

Nach sonst analoger Reaktionsführung erhält man eine Polymermikropartikeldispersion, die mit 2,4 % Lichtschutzmittel, bezogen auf den gesamten Festkörpergehalt, stabilisiert ist. Der Stabilisator ist in den "Armen" und im "Kern" der Mikrogele eingebaut.
$\overline{M}n$ = 9994, $\overline{M}w$ = 25060.

Beispiel 15:

Es wird wieder die gleiche Apparatur mit den gleichen Vorbereitungen, wie in Beispiel 1 beschrieben, verwendet.
In den Reaktionskolben gibt man unter Argon
176 g Ethylenglykoldimethylether

2 g Xylol
1,3 g 1-Trimethylsiloxy-1-isobutyoxy-2-methylpropen

Durch die Gummimembran fügt man mit einer Spritze 50 µl einer 1M Lösung von Tetrabutylammoniumbifluorid ($TBAHF_2$) in Ethylenglykoldimethylether zu.
Danach rührt man unter Argon und fügt nacheinander nach untenstehendem genauem Zeitplan folgende Komponenten zu. Die Zugabe erfolgt über zwei unabhängige Dosierpumpen.

| Komponenten | Zeit in Minuten | |
|---|---|---|
| | Start der Zugabe | Ende der Zugabe |
| I 200 µl 1M $TBAHF_2$ und 2 g Ethylenglykoldimethylether | 0 | 90 |
| II Mischung aus 62,3 g Methylmethacrylat und 1,3 g 4-Methacryloyloxy-1,2,2,6,6-pentamethylpiperidin | 0 | 15 |
| III 4,3 g Ethylenglykol-dimethacrylat | 30 | 40 |
| IV 58 g 2-Aethylhexylmethacrylat und 1,2 g 4-Methacryloyloxy-1,2,2,6,6-pentamethylpiperidin | 50 | 65 |

Nach einer Reaktionszeit von 100 Minuten wird die Polymerisation durch Zugabe von 2 g Methanol abgebrochen. Die entstandene Polymermikropartikeldispersion weist einen Festkörpergehalt von 41,2 % auf und enthält ca. 2 % Lichtschutzmittel, bezogen auf den gesamten Festkörpergehalt.

Beispiel 16:

Verwendet man an Stelle von 4-Methacryloyloxy-1,2,2,6,6-pentamethylpiperidin die gleiche Menge 2-{2-Hydroxy-5-[2-(2-methacryloyloxy-cyclohexyloxycarbonyl)-ethyl]-phenyl}-benztriazol und verfährt im übrigen wie in Beispiel 15 beschrieben, so erhält man ebenfalls eine lichtstabilisierte Polymermikropartikeldispersion, die ca. 2 % UV-Absorber, bezogen auf den gesamten Festkörpergehalt, enthält.

Beispiel 17

Es wird die gleiche Apparatur mit den gleichen Vorbereitungen verwendet, wie im Beispiel 1 bschrieben.

In das Reaktionsgefäss gibt man unter Argon
353 g Dimethoxyäthan (absolut)
2 ml 1-Methoxy-2-methyl-1-trimethylsiloxy-propen und
2,4 ml einer 0,05 M $TASHF_2$-Lösung.

Danach werden nach folgendem genauen Zeitplan folgende Komponenten zugetropft:

| Komponenten (Gemische) | Zeit in Minuten | |
|---|---|---|
| | Start der Zugabe | Ende der Zugabe |
| I 8 ml 0,05 M $TASHF_2$-Lösung | 0 | 90 |
| II 124 g (132 ml) Methylmethacrylat | 0 | 15 |
| III Gemisch bestehend aus 4,3 g Ethylenglykol-dimethacrylat 7,4 g 1-[2-Methacryloyl-oxyethyl]-4-methacryloyl-oxy-2,2,6,6-tetramethyl-piperidin | 30 | 40 |
| IV 115,8 g 2-Ethyl-hexyl-methacrylat | 50 | 65 |

Die Reaktion verläuft stark exotherm, so dass bei einer Innentemperatur von 65°C mit Eis/Wasser gekühlt wird. Nach 100 Minuten Reaktionszeit wird die Reaktion in der leicht gelblichen viskosen Polymermikropartikellösung mit 20 ml Methanol abgebrochen. Die Mikropartikel lassen sich aus Hexan oder Methanol fällen. Man erhält ca. 71,4 g im "Kern" stabilisierte Polymermikropartikel. Der Anteil des Lichtschutzmittels beträgt 3 %, bezogen auf den gesamten Festkörpergehalt.

Beispiel 18

Verwendet man in Beispiel 17 an Stelle der Komponente II ein Gemisch bestehend aus 124 g Methylmethacrylat und 7,4 g 4-Methacryloyloxy-1,2,2,6,6-pentamethylpiperidin und an Stelle des Gemisches III 8,8 g Aethylenglykol-dimethacrylat und verfährt im übrigen genau gleich wie in Beispiel 17 beschrieben, so erhält man 60 g weisse stabilisierte Polymermikropartikel, die 3 % des Lichtschutzmittels, bezogen auf den gesamten Festkörpergehalt, in den "Armen" enthalten.

Beispiel 19

Verwendet man in Beispiel 17 an Stelle der Komponente II ein Gemisch bestehend aus 124 g Methylmethacrylat und 7,4 g 4-Methacryloyloxy-1,2,2,6,6-pentamethylpiperidin und verfährt sonst genau gleich wie in Beispiel 17 ausführlich beschrieben, so erhält man 110 g weisse stabilisierte Polymermikropartikel, die jeweils 3 % der Lichtschutzmittel, bezogen auf den gesamten Festkörpergehalt, in den "Armen" und im "Kern"enthalten.

Beispiel 20

Man verfährt genau gleich wie in Beispiel 17 beschrieben und gibt nach folgendem Zeitplan die folgenden Komponenten in den Reaktionskolben:

| Komponenten | Zeit in Minuten | |
|---|---|---|
| | Start der Zugabe | Ende der Zugabe |
| I 8 ml 0,05 M $TASHF_2$-Lösung | 0 | 90 |
| II 124 g (132 ml) Methyl-methacrylat 4,8 g 4-Methacryloyloxy-1,2,2,6,6-pentamethyl-piperidin (a) | 0 | 15 |
| III 8,6 g Ethylenglykol-dimethacrylat 0,26 g 1-[2-Methacryloyl-oxyethyl]-4-methacryloyl-oxy-2,2,6,6-tetramethyl-piperidin (b) | 30 | 40 |
| IV 115,8 g 2-Ethylhexyl-methacrylat | 50 | 65 |
| V 7,6 g 2-{2-Hydroxy-3-t-butyl-5-[2-(2-methacryl-oyloxy-cyclohexyloxy-carbonyl)-ethyl]-phenyl}-benztriazol in 20 ml Dimethoxyethan gelöst (c) | 65 | 90 |

Nach einer gesamten Reaktionszeit von 105 Minuten wird die Reaktion mit 20 ml Methanol abgebrochen und in Hexan oder Methanol gefällt. Man erhält ein weisses Mikrogel, das 2 % Lichtschutzmittel (a), bezogen auf den Festkörpergehalt der "Arme" in den "Armen" und 3 % Lichtschutzmittel (b), bezogen auf den Festkörpergehalt der "Kerne", in den "Kernen" enthält, sowie 3 % des UV-Absorbers (c), bezogen auf den gesamten Festkörpergehalt, in den "Armen" enthält, was durch ein UV-Spektrum einer Mikrogellösung in $CHCl_3$ nachgewiesen wurde.

Beispiel 21:

Als Apparatur dient ein 2,5 l-Sulfierkolben, ausgerüstet mit Rührer, Rückflusskühler, Thermometer und Gummimembran-Einlass. Der Kolben wird unter Vakuum ausgeflammt und mit trockenem Argongas gefüllt. Danach füllt man, immer unter Argon, folgende Komponenten in den Sulfierkolben ein:

1189,00 g Ethylenglykoldimethylether

15,54 g Xylol

14,00 g 1-Trimethyl-siloxy-1-isobutoxy-2-methylpropen

Zu dieser Mischung gibt man mit einer Spritze durch die Gummimembran 100 µl einer 1,0 molaren Lösung von Tetrabutylammoniumbifluorid ($TBAHF_2$) in Ethylenglykoldimethylether.

Dieses Reaktionsgemisch wird unter Argon gerührt. Nun gibt man nach einem genauen Zeitplan (siehe unten) über zwei verschiedene Dosierpumpen durch die Gummimembran die folgenden Komponenten in den Reaktionskolben:

| Komponenten | Zeit in Minuten | |
|---|---|---|
| | Start der Zugabe | Ende der Zugabe |
| I 300 µl 1,0M $TBAHF_2$ und und 5,3 g Ethylenglykol-dimethylether | 0 | 90 |
| II Mischung aus: 844,4 g Methylmethacrylat und 18,0 g 4-Acryloyloxy-1,2,2,6,6-pentamethyl-piperidin | 0 | 40 |
| III 55,8 g Ethylenglykol-di-methacrylat | 55 | 70 |

Nach einer Gesamtreaktionszeit von 100 Minuten wird die Reaktion mit 20 g Methanol abgebrochen. Die entstehende Polymermikropartikeldispersion weist einen Festkörpergehalt von 43,5 % auf, enthaltend ca. 2 % Lichtschutzmittel, bezogen auf den gesamten Festkörpergehalt.

Beispiel 22:

Es wird wieder die gleiche Apparatur mit den gleichen Vorbereitungen, wie in Beispiel 21 beschrieben, verwendet. In den Reaktionskolben gibt man unter Argon
700,0 g Tetrahydrofuran (THF) (über Kalium absolutiert)
5,0 g Xylol (absolut)
7,0 g 1-Trimethylsiloxy-1-methoxy-2-methylpropen

Zu dieser Mischung fügt man mit einer Spritze durch die Gummimembran 50 µl einer 1M Tris-(dimethylamino)-sulfoniumbifluorid-Lösung ($TASHF_2$) in Ethylenglykoldimethylether zu.

Danach wird unter Argon gerührt und man gibt nach einem genauen Zeitplan (siehe unten) die folgenden Komponenten zu:

| Komponenten | Zeit in Minuten | |
|---|---|---|
| | Start der Zugabe | Ende der Zugabe |
| I 40,7 g Hexandiol-dimethacrylat | 0 | 10 |
| II 400 µl 1,0 M $TASHF_2$-Lösung und 4,1 g THF | 0 | 90 |
| III Mischung aus: 199,5 g Methylmethacrylat und 4,0 g 4-Acryloyloxy-1,2,2,6,6-pentamethylpiperidin | 40 | 55 |
| IV Mischung aus: 255,8 g Butylacrylat und 5,2 g 4-Acryloyloxy-1,2,2,6,6-pentamethylpiperidin | nach 85 Minuten die ganze Menge | |

Nach 2 Stunden Reaktionszeit wird die Polymerisation durch Zugabe von 10,0 g Methanol abgebrochen.
Man erhält eine Polymermikropartikeldispersion mit einem Festkörpergehalt von ca 41,9 %, enthaltend 1,8 % Lichtschutzmittel, bezogen auf den gesamten Festkörpergehalt.

Beispiel 23:

Verwendet man an Stelle von 4-Acryloyloxy-1,2,2,6,6-pentamethylpiperidin die gleiche Menge 2-{2-Hydroxy-3-tert.butyl-5-[2-(2-acryloyloxy-cyclohexyloxycarbonyl)-ethyl]-phenyl}-benztriazol und verfährt im übrigen genau gleich wie in Beispiel 21 beschrieben, so erhält man ebenfalls eine gegen UV-Licht stabilisierte Polymerdispersion.

Beispiel 24:

Verwendet man an Stelle von 4-Acryloyloxy-1,2,2,6,6-pentamethylpiperidin die gleiche Menge 2-{2-Hydroxy-3-tert.butyl-5-[2-(2-acryloyloxypropyloxycarbonyl)-ethyl]-phenyl}-benztriazol und verfährt im übrigen genau gleich wie in Beispiel 22 beschrieben, so erhält man ebenfalls eine gegen UV-Licht stabilisierte Polymermikropartikeldispersion.

Beispiel 25:

Verwendet man zusätzlich zu den 18,0 g 4-Acryloyloxy-1,2,2,6,6-pentamethylpiperidin die gleiche Menge 2-{2-Hydroxy-3-tert.butyl-5-[2-(2-acryloyloxy-cyclohexyloxycarbonyl)-ethyl]-phenyl}-benztriazol, und verfährt im übrigen genau gleich wie in Beispiel 21 beschrieben, so erhält man ebenfalls eine lichtstabilisierte Polymermikropartikeldispersion, die je ca 2 %, bezogen auf den Festkörpergehalt, an Benztriazol-UV-Absorber und 4-Acryloyloxy-1,2,2,6,6-pentamethylpiperidin enthält.

Beispiel 26:

Es wird wieder die gleiche Apparatur mit den gleichen Vorbereitungen, wie in Beispiel 21 beschrieben, verwendet. In den Reaktionskolben gibt man unter Argon
176 g Ethylenglykoldimethylether

2 g Xylol
1,3 g 1-Trimethylsiloxy-1-isobutoxy-2-methylpropen

Durch die Gummimembran fügt man mit einer Spritze 50 µl einer 1M Lösung von Tetrabutylammoniumbifluorid ($TBAHF_2$) in Ethylenglykoldimethylether zu.
Danach rührt man unter Argon und fügt nacheinander nach untenstehendem genauem Zeitplan folgende Komponenten zu. Die Zugabe erfolgt über zwei unabhängige Dosierpumpen.

| Komponenten | Zeit in Minuten | |
|---|---|---|
| | Start der Zugabe | Ende der Zugabe |
| I 200 µl 1M $TBAHF_2$ und 2 g Ethylenglykoldimethylether | 0 | 90 |
| II Mischung aus 62,3 g Methylmethacrylat und 1,3 g 4-Acryloyloxy-1,2,2,6,6-pentamethylpiperidin | 0 | 15 |
| III 4,3 g Ethylenglykol-dimethacrylat | 30 | 40 |
| IV 58 g 2-Aethylhexylmethacrylat und 1,2 g 4-Acryloyloxy-1,2,2,6,6-pentamethylpiperidin | 50 | 65 |

Nach einer Reaktionszeit von 100 Minuten wird die Polymerisation durch Zugabe von 2 g Methanol abgebrochen. Die entstandene Polymermikropartikeldispersion weist einen Festkörpergehalt von 41,2 % auf und enthält ca. 2 % Lichtschutzmittel, bezogen auf den gesamten Festkörpergehalt.

Beispiel 27

Die nach den Beispielen 1-20 erhaltenen sternförmigen, lichtstabilisierten Mikropartikel werden in einer härtbaren Ueberzugsmasse verarbeitet.
Die entsprechenden Mikropartikel werden als ca. 30 %ige Lösung in Butylacetat in einen Acrylat/Melamin-Klarlack so eingearbeitet, dass ihr Anteil 15 % (bezogen auf den Festkörper des Klarlacks) entspricht.

Der verwendete Klarlack hat folgende Zusammensetzung:

| | Teile |
|---|---|
| ®Uracron 2263 XB (50 %), Acrylatharz der Fa. DSM Resins BV, NL | 59,2 |
| ®Cymel 327 (90 %), Melaminharz der Fa. American Cyanamid Corp. | 11,6 |
| Butylglykolacetat | 5,5 |
| Xylol | 19,4 |
| Butanol | 3,3 |
| ®Baysilon A (1 % in Xylol), Verlaufshilfsmittel der Fa. Bayer AG, DE | 1,0 |
| | 100 |

Die erhaltene Lackmischung wird mit einer Mischung Xylol/Butanol/Butylglykolacetat 13:6:1 auf Spritzfähigkeit verdünnt und auf ein vorbereitetes Aluminiumblech (coil coat, Füller, silbermetallic Basislack) gespritzt und bei 130 °C 30 Minuten eingebrannt. Es resultiert eine Trockenschichtdicke von ca. 45 µm Klarlack.

Als Vergleich dient eine Lackmischung, die unstabilisierte Mikropartikel (hergestellt ohne Lichtschutzmittelzusatz) im gleichen Mengenverhältnis enthält, aber sonst auf gleichem Weg wie oben bereitet und appliziert wird.

Die Proben werden sowohl in einer beschleunigten Bewitterung (®UVCON bzw. ®Xenon-Weatherometer der Fa. Atlas Corp.) als auch in der Freibewitterung in Florida geprüft.

Die stabilisierten Proben weisen jeweils eine bessere Glanzhaltung und längere Rissfreiheit auf als die unstabilisierte Vergleichsprobe.

Beispiel 28

Es wird wie in Beispiel 27 verfahren, wobei jedoch die jeweiligen Mikropartikel nicht der im Beispiel 27 beschriebenen fertigen Lackmischung zugesetzt werden, sondern 15 % (bezogen auf Festkörper) der Acrylatkomponente ®Uracron 2263 XB durch die jeweiligen Mikropartikel ersetzt werden. Die Verarbeitung und Prüfung der Lackmischung erfolgt wie in Beispiel 27.

Die stabilisierten Proben weisen ebenfalls eine bessere Glanzhaltung und längere Rissfreiheit auf als die unstabilisierte Vergleichsprobe.

**Patentansprüche**

**1.** Lichtstabilisierte, sternförmig polymerisierte Polymermikropartikel, enthaltend

(a) einen Polymerkern aus 1-100 Gew.% eines oder mehrerer Monomeren, die mindestens 2 Gruppen der Formel

$$-Z^1-\overset{\overset{O}{\|}}{C}-\overset{\overset{R}{|}}{C}=CH_2 \quad (1)$$

enthalten, und
0-99 Gew.% eines oder mehrerer Monomeren, die eine Gruppe der Formel (1) enthalten, und

(b) mindestens 5 am Polymerkern befestigte Arme aus Polymerketten aus einem oder mehrerer Monomeren, die eine Gruppe der Formel (1) enthalten, wobei in Formel (1) R H, $CH_3$, $CH_3CH_2$, CN oder COOR′, $Z^1$ O oder NR′ und R′ $C_1$-$C_4$-Alkyl bedeuten;

worin mindestens 50 % der Mikropartikel mindestens 5 bis 2 000 000 solcher Arme aufweisen, wobei diese Arme aus einer oder mehreren Gruppen von verschiedenen Polymertypen bestehen, und wobei

(α) die Polymerketten einer der besagten Gruppen von Armen das gleiche oder verschiedene Molekulargewichte wie die der anderen Gruppen haben und sich von den gleichen Monomeren wie die Polymerketten der anderen Gruppen von Armen, oder von diesen verschiedenen Monomeren, ableiten,

(β) die Polymerketten jeder Gruppe von Armen eine Arm-Polymolekularität von 1,0 bis 2,0 aufweisen, wobei diese Polymolekularität definiert ist durch das Gewichtsmittel, geteilt durch das Zahlenmittel der Polymerketten in der Gruppe und

(γ) die sternförmig polymerisierten Mikropartikel selbst, enthaltend Kern und Arme aus einer oder mehreren Gruppen, eine Polymolekularität von 1,0 bis 2,0 aufweisen, wobei diese Polymolekularität definiert ist durch das Gewichtsmittel geteilt durch das Zahlenmittel der Mikropartikel;

dadurch gekennzeichnet, dass diese Polymermikropartikel 0,1 bis 30 Gew.%, bezogen auf die eingesetzten Monomeren, eines oder mehrerer Lichtschutzmittel(s) enthalten.

**2.** Mikropartikel nach Anspruch 1, worin die Polymolekularität der Arme 1,3 bis 1,6 und die Polymolekularität die Mikropartikel ebenfalls 1,3 bis 1,6 beträgt.

**3.** Mikropartikel nach Anspruch 1, die eine Gruppe von Armen enthalten.

**4.** Mikropartikel nach Anspruch 1, die 2 verschiedene Gruppen von Armen enthalten.

**5.** Lichtstabilisierte, lösliche, sternförmig polymerisierte Polymermikropartikel enthaltend

(a) einen vernetzten Kern enthaltend ein Polymer aus einer Mischung von 1-100 Gew.% eines oder mehrerer Monomeren, die mindestens 2 Gruppen der Formel

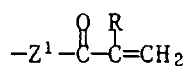

(1)

enthalten, und

0-99 Gew.% eines oder mehrerer Monomeren, die eine Gruppe der Formel (1) enthalten, und

(b) mindestens 5 am Polymerkern befestigte Arme aus Polymerketten, die von einem oder mehreren Monomeren abgeleitet sind, die eine Gruppe der Formel (1) enthalten, wobei in Formel (1) R H, $CH_3$, $CH_3CH_2$, CN oder COOR′, $Z^1$ O oder NR′ und R′ $C_1$-$C_4$-Alkyl bedeuten;

worin mindestens 50 % der Mikropartikel mindestens 5 bis 2 000 000 Arme aufweisen, wobei das Verhältnis der Anzahl der Arme zur Zahl der bifunktionellen wiederkehrenden Acryleinheiten im Kern ≦ 1:1 ist, dadurch gekennzeichnet, dass diese Polymermikropartikel 0,1 bis 30 Gew.%, bezogen auf die eingesetzten Monomeren, eines oder mehrerer Lichtschutzmittel(s) enthalten.

**6.** Mikropartikel nach Anspruch 5, erhalten durch Polymerisation in Gegenwart eines Polymerisationsinitiators, worin das Molverhältnis Initiator:difunktionelles Acryl-Monomer ≦ 1:1 ist.

**7.** Lichtstabilisierte, "lebende", sternförmig polymerisierte Polymermikropartikel, enthaltend

(a) einen vernetzten Kern enthaltend ein Polymer aus einer Mischung aus

1-100 Gew.% eines Monomeren mit mindestens 2 durch Gruppentransferpolymerisation polymerisierbaren C-C-Doppelbindungen und

0-99 Gew.% eines Monomeren mit einer durch Gruppentransferpolymerisation polymerisierbaren C-C-Doppelbindung,

(b) mindestens 5 am Polymerkern befestigte Arme enthaltend Polymerketten aus einem oder mehreren Monomeren, die durch Gruppentransferpolymerisation polymerisierbar sind, und

(c) an den Kern oder/und an mindestens einige der Arme gebundene "lebende" Gruppentransferpolymerisationszentren, die zur Weiterpolymerisation befähigt sind,

dadurch gekennzeichnet, dass diese Polymermikropartikel 0,1 bis 30 Gew.%, bezogen auf die eingesetzten Monomeren, eines oder mehrerer Lichtschutzmittel(s) enthalten.

**8.** Sternförmig polymerisierte Polymermikropartikel, erhältlich durch Desaktivierung der "lebenden" Mikropartikel nach Anspruch 7 mit Hilfe eines die "lebenden" Gruppen der Gruppentransferpolymerisationszentren desaktivierenden Reagens, dadurch gekennzeichnet, dass diese Polymermikropartikel 0,1 bis 30 Gew.%, bezogen auf die eingesetzten Monomeren, eines oder mehrerer Lichtschutzmittel(s) enthalten.

**9.** Mikropartikel nach einem der Ansprüche 1 bis 8, dadurch gekennzeichnet, dass mindestens ein Teil der Polymerisation der Monomeren in Gegenwart des (der) Lichtschutzmittel(s) erfolgt.

**10.** Mikropartikel nach einem der Ansprüche 1 bis 8, worin das (die) Lichtschutzmittel mindestens eine reaktive Gruppe aufweist, mit der es chemisch an das Polymer gebunden werden kann.

**11.** Mikropartikel nach Anspruch 10, wobei es sich bei den reaktiven Gruppen um ethylenische Doppelbindungen handelt.

**12.** Mikropartikel nach einem der Ansprüche 1 bis 8, wobei man als Lichtschutzmittel mindestens eine Verbindung aus der Klasse der sterisch gehinderten Amine verwendet.

**13.** Mikropartikel nach Anspruch 12, wobei man als Lichtschutzmittel ein 2,2,6,6-Tetraalkylpiperidinderivat verwendet, welches in seinem Molekül mindestens eine Gruppe der Formel I

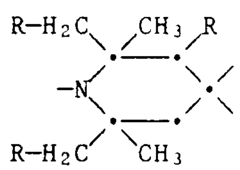

(I),

enthält, wobei R Wasserstoff oder Methyl ist.

**14.** Mikropartikel nach einem der Ansprüche 1 bis 8, worin das Lichtschutzmittel ein UV-Absorber ist.

**15.** Mikropartikel nach einem der Ansprüche 1 bis 8, worin als Lichtschutzmittel ein UV-Absorber und ein sterisch gehindertes Amin eingesetzt wird.

**16.** Mikropartikel nach Anspruch 14 oder 15, worin der UV-Absorber der Klasse der 2-(2-Hydroxyphenyl)-benztriazole angehört.

**17.** Ein Arm/Kern-Verfahren zur Herstellung von lichtstabilisierten, sternförmig polymerisierten Mikropartikeln, worin man
(a) ein "lebendes" Polymer herstellt durch Reaktion eines Gruppentransferinitiators mit einem oder mehreren Monomeren mit einer zur Gruppentransferpolymerisation befähigten C-C-Doppelbindung und
(b) das erhaltene "lebende" Polymer mit einer Mischung umsetzt, die
1-100 Gew.% eines Monomeren mit mindestens 2 durch Gruppentransferpolymerisation polymerisierbaren C-C-Doppelbindungen und
0-99 Gew.% eines Monomeren mit einer durch Gruppentransferpolymerisation polymerisierbaren C-C-Doppelbindung enthält,
dadurch gekennzeichnet, dass man Schritt (a) oder/und (b) in Gegenwart von 0,1 bis 30 Gew.%, bezogen auf die Monomeren, eines oder mehrerer Lichtschutzmittel(s) durchführt.

**18.** Ein Kern/Arm-Verfahren zur Herstellung von lichtstabilisierten, sternförmig polymerisierten Mikropartikeln, worin man

(a) einen "lebenden" Kern herstellt durch Reaktion eines Gruppentransferinitiators mit einer Mischung enthaltend
1-100 Gew.% eines Monomeren mit mindestens 2 durch Gruppentransferpolymerisation polymerisierbaren C-C-Doppelbindungen und
0-99 Gew.% eines Monomeren mit einer durch Gruppentransferpolymerisation polymerisierbaren C-C-Doppelbindung, und
(b) den erhaltenen "lebenden" Kern mit einem oder mehreren Monomeren mit einer C-C-Doppelbindung, die durch Gruppentransferpolymerisation polymerisierbar ist, umsetzt
dadurch gekennzeichnet, dass man Schritt (a) oder/und (b) in Gegenwart von 0,1 bis 30 Gew.%, bezogen auf die Monomeren, eines oder mehrerer Lichtschutzmittel(s) durchführt.

**19.** Ein Arm/Kern/Arm-Verfahren zur Herstellung von lichtstabilisierten, sternförmig polymerisierten Mikropartikeln, worin man
(a) ein "lebendes" Polymer herstellt durch Reaktion eines Gruppentransferinitiators mit einem oder mehreren Monomeren mit einer C-C-Doppelbindung, die durch Gruppentransferpolymerisation polymerisierbar ist,
(b) das erhaltene "lebende" Polymer mit einer Mischung enthaltend
1-100 Gew.% eines Monomeren mit mindestens 2 durch Gruppentransferpolymerisation polymerisierbaren C-C-Doppelbindungen und
0-99 Gew.% eines Monomeren mit einer durch Gruppentransferpolymerisation polymerisierbaren C-C-Doppelbindung
so umsetzt, dass man "lebende" sternförmig polymerisierte Mikropartikel mit "lebenden" Gruppentransferpolymerisationszentren im Kern erhält, und
(c) die so erhaltenen "lebenden" Polymeren mit einem oder mehreren Monomeren umsetzt, die eine C-C-Doppelbindung enthalten, die durch Gruppentransferpolymerisation polymerisierbar sind, wobei diese Monomeren gleich oder verschieden von denen sind, die in Schritt (a) eingesetzt werden,
dadurch gekennzeichnet, dass man Schritt (a), (b) oder/und (c) in Gegenwart von 0,1 bis 30 Gew.%, bezogen auf die Monomeren, eines oder mehrerer Lichtschutzmittel(s) durchführt.

**20.** Verfahren nach einem der Ansprüche 17-19, worin man nach der Polymerisation die "lebenden" Gruppen der Gruppentransferpolymerisationszentren mit einem desaktivierenden Agens desaktiviert, insbesondere mit einer Protonen abspaltenden Verbindung.

**21.** Verwendung der in den Ansprüchen 1 bis 20 beschriebenen bzw. erhältlichen Polymermikropartikel als Bestandteil von Beschichtungszusammensetzungen.

**22.** Beschichtungszusammensetzung, in der das filmbildende Material
a) 1 bis 95 Vol-% einer dispersen Phase, die die gemäss einem der Ansprüche 1 bis 20 beschriebenen bzw. erhältlichen Mikropartikel enthält, und
b) 99 bis 5 Vol-% einer flüssigen kontinuierlichen Phase mit einer Viskosität von 0,1 bis 30 Poise bei Raumtemperatur, die dazu fähig ist, in ein filmbildendes Polymer zu härten,
enthält, wobei das Gesamtvolumen von a) und b) 100% beträgt.

**23.** Beschichtungszusammensetzung nach Anspruch 22, in der das filmbildende Material a) 5-85 Vol-% der dispersen Phase, die mindestens 50 Vol-% erfindungsgemässe Mikropartikel enthält, und b) 95-15 Vol-% der flüssigen kontinuierlichen Phase die bei Raumtemperatur eine Viskosität von 0,1 bis 20 Poise aufweist, enthält.

**24.** Beschichtungszusammensetzung nach Anspruch 22, worin die kontinuierlicher Phase b) ebenfalls ein oder mehrere Lichtschutzmittel enthält.

**25.** Beschichtungszusammensetzung nach Anspruch 22, worin die flüssige kontinuierliche Phase b) ein duroplastisches Harz enthält.

**26.** Beschichtungszusammensetzung nach Anspruch 25, worin es sich bei dem Harz um ein vernetzbares Acrylharz, Polyester/Alkyd-Harz oder Polyurethanharz handelt, das gegebenenfalls mit Aminoplasten, Polyisocyanat oder Polyepoxiden vernetzt ist.

27. Beschichtungszusammensetzung nach Anspruch 22, worin die flüssige kontinuierliche Phase b) einen Reaktivverdünner enthält, der selbst nicht härtbar ist, jedoch reaktive Gruppen besitzt, mittels derer er an der Härtung des filmbildenden Materials teilnehmen kann.

## Claims

1. Light-stabilized star polymer microparticles containing
   (a) a polymer core of 1-100% by weight of one or more monomers which contain at least 2 groups of the formula

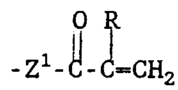 (1)

   and
   0-99% by weight of one or more monomers which contain one group of the formula (1), and
   (b) at least 5 arms, fixed to the polymer core, of polymer chains consisting of one or more monomers which contain a group of the formula (1), R in the formula (1) being H, $CH_3$, $CH_3CH_2$, CN or COOR', $Z^1$ being O or NR' and R' being $C_1$-$C_4$ alkyl,
   at least 50% of the microparticles having at least 5 up to 2,000,000 such arms, these arms consisting of one or more groups of different polymer types, and
   ($\alpha$) the polymer chains of one of the said groups of arms having molecular weights which are the same as or different from those of the other groups, and being derived from the same monomers as the polymer chains of the other groups of arms, or from monomers differing from these,
   ($\beta$) the polymer chains of each group of arms having an arm polydispersity of 1.0 to 2.0, this polydispersity being defined by the weight average divided by the number average of the polymer chains in the group, and
   ($\gamma$) the star polymer microparticles themselves, which contain a core and arms consisting of one or more groups, having a polydispersity of 1.0 to 2.0, this polydispersity being defined by the weight average divided by the number average of the microparticles, which polymer microparticles contain 0.1 to 30% by weight, relative to the monomers employed, of one or more light stabilizer(s).

2. Microparticles according to claim 1, wherein the polydispersity of the arms is 1.3 to 1.6 and the polydispersity of the microparticles is also 1.3 to 1.6.

3. Microparticles according to claim 1, which contain one group of arms.

4. Microparticles according to claim 1, which contain 2 different groups of arms.

5. Light-stabilized, soluble, star polymer microparticles containing
   (a) a crosslinked core containing a polymer or a mixture of 1-100% by weight of one or more monomers which contain at least 2 groups of the formula

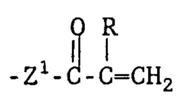 (1)

   and 0-99% by weight of one or more monomers which contain one group of the formula (1), and
   (b) at least 5 arms, fixed to the polymer core, of polymer chains derived from one or more monomers which contain a group of the formula (1), R in the formula (1) being H, $CH_3$, $CH_3CH_2$, CN or COOR', $Z^1$ being O or NR' and R' being $C_1$-$C_4$ alkyl,
   at least 50% of the microparticles having at least 5 up to 2,000,000 arms, the ratio of the number of arms to the number of bifunctional recurring acrylic units in the core being ≦ 1:1, which polymer microparticles contain 0.1 to 30% by weight, relative to the monomers employed, of one or more light stabilizer(s).

6. Microparticles according to claim 5, obtained by polymerization in the presence of a polymerization initiator, the molar initiator: difunctional acrylic monomer ratio being ≦ 1:1.

7. Light-stabilized, "living", star polymer microparticles, containing
(a) a crosslinked core containing a polymer of a mixture of
1-100% by weight of a monomer having at least 2 C-C double bonds polymerizable by a group transfer polymerization and
0-99% by weight of a monomer having one C-C double bond polymerizable by group transfer polymerization,
(b) at least 5 arms fixed to the polymer core and containing polymer chains consisting of one or more monomers polymerizable by group transfer polymerization, and
(c) "living" group transfer polymerization centres which are bonded to the core or/and at least some of the arms and are capable of further polymerization,
which polymer microparticles contain 0.1 to 30% by weight, relative to the monomers employed, of one or more light stabilizer(s).

8. Star polymer microparticles, obtainable by deactivation of the "living" microparticles according to claim 7 by means of a reagent which deactivates the "living" groups of the group transfer polymerization centres, which polymer microparticles contain 0.1 to 30% by weight, relative to the monomers employed, of one or more light stabilizer(s).

9. Microparticles according to any one of claims 1 to 8, at least a part of the polymerization of the monomers being carried out in the presence of the light stabilizer(s).

10. Microparticles according to any one of claims 1 to 8, wherein the light stabilizer(s) contain(s) at least one reactive group, by means of which it can be chemically bonded to the polymer.

11. Microparticles according to claim 10, wherein the reactive groups are ethylenic double bonds.

12. Microparticles according to any one of claims 1 to 8, wherein the light stabilizer used is at least one compound from the claims of sterically hindered amines.

13. Microparticles according to claim 12, wherein the light stabilizer used is a 2,2,6,6-tetraalkylpiperidine derivative which, in its molecule, contains at least one group of the formula I

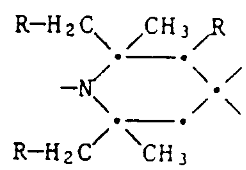

in which R is hydrogen or methyl.

14. Microparticles according to any one of claims 1 to 8, wherein the light stabilizer is a UV absorber.

15. Microparticles according to any one of claims 1 to 8, wherein a UV absorber and a sterically hindered amine are employed as the light stabilizer.

16. Microparticles according to claim 14 or 15, wherein the UV absorber belongs to the class of 2-(2-hydroxyphenyl)-benzotriazoles.

17. An arm/core process for the preparation of light-stabilized, star polymer microparticles, in which
(a) a "living" polymer is prepared by reacting a group transfer initiator with one or more monomers having a C-C double bond capable of group transfer polymerization, and
(b) the resulting "living" polymer is reacted with a mixture which contains 1-100% by weight of a monomer having at least 2 C-C double bonds polymerizable by group transfer polymerization and 0-99% by weight of a monomer having one C-C double bond polymerizable by group transfer polymerization, which comprises carrying out step (a) or/and (b) in the presence of 0.1 to 30% by weight, relative to the monomers, of one or more light stabilizer(s).

**18.** A core/arm process for the preparation of light-stabilized, star polymer microparticles, in which
(a) a "living" core is prepared by reacting a group transfer initiator with a mixture containing
1-100% by weight of a monomer having at least 2 C-C double bonds polymerizable by group transfer polymerization and
0-99% by weight of a monomer having one C-C double bond polymerizable by group transfer polymerization, and
(b) the resulting "living" core is reacted with one or more monomers having a C-C double bond polymerizable by group transfer polymerization,
which comprises carrying out step (a) and/or (b) in the presence of 0.1 to 30% by weight, relative to the monomers, of one or more light stabilizer(s).

**19.** An arm/core/arm process for the preparation of light-stabilized star polymer microparticles, in which
(a) a "living" polymer is prepared by reacting a group transfer initiator with one or more monomers having a C-C double bond polymerizable by group transfer polymerization,
(b) the resulting "living" polymer is reacted with a mixture containing
1-100% by weight of a monomer having at least 2 C-C double bonds polymerizable by group transfer polymerization and
0-99% by weight of a monomer having one C-C double bond polymerizable by group transfer polymerization, in such a way that "living" star polymer microparticles with "living" group transfer polymerization centres in the core are obtained, and
(c) the "living" polymers thus obtained are reacted with one or more monomers which contain a C-C double bond and which are polymerizable by group transfer polymerization, these monomers being identical to or different from those employed in step (a),
which comprises carrying out step (a), (b) or/and (c) in the presence of 0.1 to 30% by weight, relative to the monomers, of one or more light stabilizer(s).

**20.** A process according to any one of claims 17-19, wherein, after the polymerization, the "living" groups of the group transfer polymerization centres are deactivated by means of a deactivating agent, especially a proton donor compound.

**21.** The use of the polymer microparticles described in or obtainable according to any one of claims 1 to 20 as a constituent of coating compositions.

**22.** A coating composition, wherein the film-forming material comprises
a) 1 to 95% by volume of a disperse phase which contains the microparticles described in or obtainable according to any one of claims 1 to 20, and
b) 99 to 5% by volume of a liquid continuous phase which has a viscosity of 0.1 to 30 poise at room temperature and is capable of curing to give a film-forming polymer, the total volume of a) and b) being 100%.

**23.** A coating composition according to claim 22, wherein the film-forming material comprises a) 5-85% by volume of the disperse phase containing at least 50% by volume of microparticles according to the invention and b) 95-15% by volume of the liquid continuous phase having a viscosity of 0.1 to 20 poise at room temperature.

**24.** A coating composition according to claim 22, wherein the continuous phase b) also contains one or more light stabilizers.

**25.** A coating composition according to claim 22, wherein the liquid continuous phase b) contains a thermosetting resin.

**26.** A coating composition according to claim 25, wherein the resin is a crosslinkable acrylic resin, polyester/alkyd resin or polyurethane resin, which may have been crosslinked with aminoplasts, polyisocyanate or polyepoxides.

27. A coating composition according to claim 22, wherein the liquid continuous phase b) contains a reactive diluent which is itself not curable but contains reactive groups, by means of which it can participate in the curing of the film-forming material.

## Revendications

1. Microparticules polymères, polymérisées en étoile, stabilisées à la lumière, contenant :
   (a) un noyau polymère constitué de 1 à 100 % en poids d'un ou plusieurs monomères qui contiennent au moins deux groupes de formule :

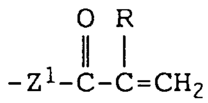

(1)

   et 0 à 99 % en poids d'un ou plusieurs monomères contenant un groupe de formule (1), et
   (b) au moins 5 bras, fixés au noyau polymère, constitués de chaînes polymères elles-mêmes constituées d'un ou plusieurs monomères contenant un groupe de formule (1), auquel cas, dans la formule (1), R est H, $CH_3$, $CH_3CH_2$, CN ou COOR', $Z^1$ est O ou NR' et R' est un radical alkyle en $C_1$-$C_8$ ;
   où au moins 50 % des microparticules comportent au moins 5 à 2 000 000 de bras de ce type, auquel cas ces bras sont constitués d'un ou plusieurs groupes de différents types de polymères, et où
   ($\alpha$) les chaînes polymères de l'un des groupes mentionnés de bras ont une masse moléculaire identique à celle des autres groupes, ou différente de cette dernière, et dérivent des mêmes monomères que les chaînes polymères des autres groupes de bras, ou de monomères différents de ces derniers,
   ($\beta$) les chaînes polymères de chaque groupe de bras comportent une polymolécularité de bras de 1,0 à 2,0, la polymolécularité étant définie par la masse moléculaire moyenne en poids divisée par la masse moléculaire moyenne en nombre des chaînes polymères du groupe, et
   ($\gamma$) les microparticules polymérisées en étoile, qui par elles-mêmes contiennent un noyau et des bras constitués d'un ou plusieurs groupes, ont une polymolécularité de 1,0 à 2,0, cette polymolécularité étant définie par le rapport de la masse moléculaire moyenne en poids à la masse moléculaire moyenne en nombre des microparticules ;
   caractérisées en ce que ces microparticules polymères contiennent de 0,1 à 30 % en poids, par rapport aux monomères utilisés, d'un ou plusieurs agent de protection contre la lumière.

2. Microparticules selon la revendication 1, dans lesquelles la polymolécularité des bras est de 1,3 à 1,6 et la polymolécularité des microparticules est elle aussi de 1,3 à 1,6.

3. Microparticules selon la revendication 1, qui contiennent un groupe de bras.

4. Microparticules selon la revendication 1, qui contiennent deux groupes différents de bras.

5. Microparticules polymères, polymérisées en étoile, solubles, stabilisées à la lumière, contenant :
   (a) un noyau réticulé contenant un polymère constitué d'un mélange de 1 à 100 % en poids d'un ou plusieurs monomères contenant au moins deux groupes de formule :

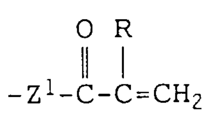

(1)

   et de 0 à 99 % en poids d'un ou plusieurs monomères contenant un groupe de formule (1), et
   (b) au moins 5 bras, fixés au noyau polymère, constitués de chaînes polymères dérivant d'un ou plusieurs monomères comportant un groupe de formule (1), où, dans la formule (1), R est H, $CH_3$, $CH_3CH_2$, CN ou COOR', $Z^1$ est O ou NR' et R' est un radical alkyle en $C_1$-$C_8$ ;

où au moins 50 % des microparticules contiennent au moins 5 à 2 000 000 de bras, le rapport du nombre des bras au nombre des motifs acrylique répétitifs bifonctionnels dans le noyau étant inférieur à 1:1, caractérisées en ce que ces microparticules contiennent de 0,1 à 30 % en poids, par rapport aux monomères utilisés, d'un ou plusieurs agents de protection contre la lumière.

**6.** Microparticules selon la revendication 5, obtenues par polymérisation en présence d'un amorceur de polymérisation, la proportion molaire de l'amorceur au monomère acrylique difonctionnel étant inférieure ou égale à 1:1.

**7.** Microparticules polymères polymérisées en étoile, "vivantes", stabilisées à la lumière, contenant
(a) un noyau réticulé contenant un polymère constitué d'un mélange
de 1 à 100 % en poids d'un monomère comportant au moins 2 doubles liaisons C-C polymérisables par polymérisation par transfert de groupe, et
de 0 à 99 % en poids d'un monomère comportant une double liaison C-C polymérisable par polymérisation par transfert de groupe,
(b) au moins 5 bras fixés au noyau polymère, contenant des chaînes polymères constituées d'un ou plusieurs monomères polymérisables par polymérisation par transfert de groupe, et
(c) des centres de polymérisation par transfert de groupe, "vivants", fixés au noyau et/ou à au moins quelques-uns des bras, centres susceptibles d'une post-polymérisation,
caractérisées en ce que ces microparticules polymères contiennent de 0,1 à 30 % en poids, par rapport aux monomères utilisés, d'un ou plusieurs agents de protection contre la lumière ;

**8.** Microparticules polymères polymérisées en étoile, pouvant être obtenues par désactivation des microparticules "vivantes" selon la revendication 7 à l'aide d'un réactif assurant la désactivation des groupes "vivants" des centres de polymérisation par transfert de groupe, caractérisées en ce que ces microparticules polymères contiennent de 0,1 à 30 % en poids, par rapport aux monomères utilisés, d'un ou plusieurs agents de protection contre la lumière.

**9.** Microparticules selon l'une des revendications 1 à 8, caractérisées en ce qu'au moins une partie de la polymérisation des monomères s'effectue en présence du ou des agents de protection contre la lumière.

**10.** Microparticules selon l'une des revendications 1 à 8, dans lesquelles le ou les agents de protection contre la lumière comportent au moins un groupe réactif avec lequel ils peuvent être chimiquement liés au polymère.

**11.** Microparticules selon la revendication 10, dans lesquelles, pour ce qui est des groupes réactifs, il s'agit de doubles liaisons éthyléniques.

**12.** Microparticules selon l'une des revendications 1 à 8, dans lesquelles on utilise en tant qu'agent de protection contre la lumière au moins un composé de la classe des amines à empêchement stérique.

**13.** Microparticules selon la revendication 12, dans lesquelles on utilise comme agent de protection contre la lumière un dérivé 2,2,6,6-tétraalkylé de la pipéridine, qui dans sa molécule contient au moins un groupe de formule I :

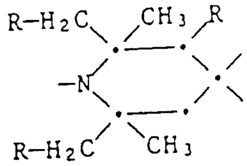

(I)

R étant un hydrogène ou le radical méthyle.

**14.** Microparticules selon l'une des revendications 1 à 8, dans lesquelles l'agent de protection contre la lumière est un absorbant UV.

15. Microparticules selon l'une des revendications 1 à 8, dans lesquelles on utilise en tant qu'agent de protection contre la lumière un absorbant UV et une amine à empêchement stérique

16. Microparticules selon la revendication 14 ou 15, dans lesquelles l'absorbant UV appartient à la classe des (hydroxy-2 phényl)-2 benzotriazoles.

17. Procédé bras/noyau pour produire des microparticules stabilisées à la lumière et polymérisées en étoile, dans lequel :
(a) on prépare un polymère "vivant" par réaction d'un amorceur de transfert de groupe avec un ou plusieurs monomères comportant une double liaison C-C à même d'assurer la polymérisation par transfert de groupe, et
(b) on fait réagir le polymère "vivant" ainsi obtenu avec un mélange contenant 1 à 100 % en poids d'un monomère comportant au moins deux doubles liaisons C-C pouvant être polymérisées par polymérisation par transfert de groupe et de 0 à 99 % en poids d'un monomère comportant une double liaison C-C pouvant être polymérisée par polymérisation par transfert de groupe,
caractérisé en ce qu'on met en oeuvre l'étape (a) et/ou l'étape (b) en présence de 0,1 à 30 % en poids, par rapport aux monomères, d'un ou plusieurs agents de protection contre la lumière.

18. Procédé noyau/bras pour préparer des microparticules stabilisées à la lumière et polymérisées en étoile, dans lequel :
(a) on prépare un noyau "vivant" par réaction d'un amorceur de transfert de groupe avec un mélange contenant 1 à 100 % en poids d'un monomère comportant au moins deux doubles liaisons C-C pouvant être polymérisées par polymérisation par transfert de groupe et de 0 à 99 % en poids d'un monomère comportant une double liaison C-C pouvant être polymérisée par polymérisation par transfert de groupe, et
(b) on fait réagir le noyau "vivant" ainsi obtenu avec un ou plusieurs monomères comportant une double liaison C-C, et pouvant être polymérisés par polymérisation par transfert de groupe,
caractérisé en ce qu'on met en oeuvre l'étape (a) et/ou l'étape (b) en présence de 0,1 à 30 % en poids, par rapport aux monomères, d'un ou plusieurs agents de protection contre la lumière.

19. Procédé bras/noyau/bras pour préparer des microparticules stabilisées à la lumière et polymérisées en étoile, dans lequel :
(a) on prépare un polymère "vivant" par réaction d'un amorceur de transfert de groupe avec un ou plusieurs monomères comportant une double liaison C-C à même d'assurer la polymérisation par transfert de groupe, et
(b) on fait réagir le polymère "vivant" ainsi obtenu avec un mélange contenant 1 à 100 % en poids d'un monomère comportant au moins deux doubles liaisons C-C pouvant être polymérisées par polymérisation par transfert de groupe et de 0 à 99 % en poids d'un monomère comportant une double liaison C-C pouvant être polymérisée par polymérisation par transfert de groupe,
de façon à obtenir des microparticules polymérisées en étoile et "vivantes" comportant dans le noyau des centres "vivants" de polymérisation par transfert de groupe, et
(c) on fait réagir les polymères "vivants" ainsi obtenus avec un ou plusieurs monomères comportant une double liaison C-C et pouvant être polymérisés par polymérisation par transfert de groupe, ces monomères étant identiques à ceux utilisés dans l'étape (a) ou en étant différents,
caractérisé en ce qu'on met en oeuvre l'étape (a) et/ou l'étape (b) en présence de 0,1 à 30 % en poids, par rapport aux monomères, d'un ou plusieurs agents de protection contre la lumière.

20. Procédé selon l'une des revendications 17 à 19, dans lequel on désactive, après la polymérisation, les groupes actifs des centres de polymérisation par transfert de groupe à l'aide d'un agent de désactivation, notamment d'un composé éliminant des protons.

21. Utilisation des microparticules polymères décrites dans les revendications 1 à 20 ou pouvant y être obtenues, en tant que constituants de compositions de revêtement.

22. Composition de revêtement, dans laquelle le matériau feuillogène contient :
a) de 1 à 95 % en volume d'une phase dispersée qui contient les microparticules décrites ou pouvant être obtenues selon l'une des revendications 1 à 20, et

b) de 99 à 5 % en volume d'une phase continue liquide ayant une viscosité à la température ambiante de 0,1 à 30 P, à même de durcir pour donner un polymère feuillogène,

le volume total de a) et de b) étant de 100 %.

**23.** Composition de revêtement selon la revendication 22, dans laquelle le matériau feuillogène contient a) de 5 à 85 % en volume de la phase dispersée contenant au moins 50 % en volume des microparticules selon l'invention, et b) de 95 à 15 % en volume de la phase continue liquide, qui à la température ambiante a une viscosité de 0,1 à 20 P.

**24.** Composition de revêtement selon la revendication 22, dans laquelle la phase continue b) contient elle aussi un ou plusieurs agents de protection contre la lumière.

**25.** Composition de revêtement selon la revendication 22, dans laquelle la phase continue liquide b) contient une résine thermoplastique.

**26.** Composition de revêtement selon la revendication 25, dans laquelle, pour ce qui est de la résine, il s'agit d'une résine acrylique réticulable, d'une résine de polyester/alkyde ou d'une résine de polyuréthanne, éventuellement réticulée par des aminoplastes, un polyisocyanate ou des polyépoxydes.

**27.** Composition de revêtement selon la revendication 22, dans laquelle la phase continue liquide b) contient un diluant réactif, lequel n'est pas durcissable par lui-même mais contient des groupes réactifs à l'aide desquels il peut participer au durcissement du matériau feuillogène.